(19) Europäisches Patentamt / European Patent Office / Office européen des brevets

(11) **EP 4 390 866 B1**

(12) **EUROPEAN PATENT SPECIFICATION**

(45) Date of publication and mention
of the grant of the patent:
**08.04.2026 Bulletin 2026/15**

(21) Application number: **23211257.3**

(22) Date of filing: **21.11.2023**

(51) International Patent Classification (IPC):
*G06V 10/80* (2022.01)     *G06V 20/13* (2022.01)
*G06V 10/82* (2022.01)     *G01S 13/86* (2006.01)
*G01S 13/90* (2006.01)

(52) Cooperative Patent Classification (CPC):
**G06V 10/82; G01S 13/86; G01S 13/867;
G06V 10/806; G06V 20/13;** G01S 13/90

(54) **FUSION METHOD FOR MULTIMODAL REMOTE SENSING DATA BASED ON DEDICATED AND SHARED ARCHITECTURE**

FUSIONSVERFAHREN FÜR MULTIMODALE FERNERKUNDUNGSDATEN AUF DER BASIS EINER DEDIZIERTEN UND GEMEINSAM GENUTZTEN ARCHITEKTUR

PROCÉDÉ DE FUSION POUR DONNÉES DE DÉTECTION À DISTANCE MULTIMODALES SUR LA BASE D'UNE ARCHITECTURE DÉDIÉE ET PARTAGÉE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **19.12.2022 CN 202211635621**

(43) Date of publication of application:
**26.06.2024 Bulletin 2024/26**

(73) Proprietor: **Aerospace Information Research Institute,
Chinese Academy of Sciences
Beijing 100094 (CN)**

(72) Inventors:
• **FU, Kun**
  **Beijing, 100094 (CN)**
• **SUN, Xian**
  **Beijing, 100094 (CN)**
• **WANG, Peijin**
  **Beijing, 100048 (CN)**
• **HE, Qibin**
  **Beijing, 100094 (CN)**
• **LU, Wanxuan**
  **Beijing, 100094 (CN)**
• **DIAO, Wenhui**
  **Beijing, 100094 (CN)**
• **YAN, Zhiyuan**
  **Beijing, 100094 (CN)**
• **FENG, Yingchao**
  **Beijing, 100094 (CN)**

(74) Representative: **Gill Jennings & Every LLP
The Broadgate Tower
20 Primrose Street
London EC2A 2ES (GB)**

(56) References cited:
• **CAO ZHIYING ET AL: "C3Net: Cross-Modal Feature Recalibrated, Cross-Scale Semantic Aggregated and Compact Network for Semantic Segmentation of Multi-Modal High-Resolution Aerial Images", REMOTE SENSING, vol. 13, no. 3, 2 February 2021 (2021-02-02), CH, pages 528, XP093134479, ISSN: 2072-4292, DOI: 10.3390/ rs13030528**

EP 4 390 866 B1

Description

FIELD

The present disclosure relates to the field of remote sensing data processing, and in particular to a fusion method for multimodal data based on dedicated and shared architecture.

BACKGROUND

With the development of aerospace technology, multimodal remote sensing has become an effective means of surveying and monitoring resource, especially multimodal remote sensing data may be interpreted to effectively assist in analyzing situation information of ground objects. In order to further improve the efficiency of Earth observation, how to interpret multimodal remote sensing data has become a key issue urgently to be solved.

Existing remote sensing data interpretation methods are more applicable to fixed combinations of remote sensing modal data, and may fail to interpret remote sensing data based on any combination of modalities, which reduces the efficiency of earth observation. "C3Net: Cross-Modal Feature Recalibrated, Cross-Scale Semantic Aggregated and Compact Network for Semantic Segmentation of Multi-Modal High-Resolution Aerial Images" by Z. Cao et al, Remote Sens. 2021, 13, 528 (XP93134479A) discloses a C3Net for cross-modal feature recalibrated, cross-scale semantic aggregated and compact network for semantic segmentation of multi-modal high-resolution aerial images. The C3Net contains several backbones for extracting features of different modalities. A plug-and-play module is designed to effectively recalibrate and aggregate multi-modal features. The semantic contextual extraction module is redesigned based on the lightweight convolutional groups.

SUMMARY

In view of this, the following technical solutions are provided according to the present disclosure.

According to a first aspect of the present disclosure, a fusion method for multimodal remote sensing data based on dedicated and shared architecture is provided according to claim 1 hereto. The method includes:

obtaining multiple pieces of initial remote sensing data of a region of interest, where the multiple pieces of initial remote sensing data have different modal types;

performing, for each of the multiple pieces of initial remote sensing data, data correction processing on the initial remote sensing data using a dedicated network based on a modal type corresponding to the initial remote sensing data to generate a piece of intermediate remote sensing data corresponding to the initial remote sensing data, where all pieces of intermediate remote sensing data corresponding to the multiple pieces of initial remote sensing data have a same spatial dimension and a same channel dimension;

obtaining, for each of the pieces of intermediate remote sensing data, a confidence value corresponding to the piece of intermediate remote sensing data using a shared feature association network, where each of the pieces of intermediate remote sensing data includes multiple feature parameters, each of the feature parameters corresponds to a confidence value, and a confidence value of a piece of intermediate remote sensing data is determined based on representation strengths of feature parameters of the piece of intermediate remote sensing data to corresponding ground feature information in the region of interest;

performing, for each of the pieces of intermediate remote sensing data, replacement processing on a target feature parameter in the piece of intermediate remote sensing data based on the confidence value of the piece of intermediate remote sensing data to generate a piece of sub fused remote sensing data corresponding to the piece of initial remote sensing data, where the target feature parameter corresponds to a confidence value less than a confidence threshold, and a confidence value corresponding to a feature parameter in the sub fused remote sensing data is greater than or equal to the confidence threshold; and

generating fused remote sensing data of the region of interest based on all pieces of sub fused remote sensing data and modal weights, where the modal weights are determined based on fusion ratios of sub fused remote sensing data having different modal types.

In a further embodiment of the present disclosure, the data correction processing includes:

performing data normalization processing on the initial remote sensing data to generate first initial data, where each of parameters in the first initial data is within a preset range; and

performing data denoising processing on the first initial data to generate second initial data, where the data denoising processing is performed to reduce a parameter based on a value of the parameter, the value of the parameter is positively correlated with a reduction degree, and both the data normalization processing and the data denoising processing are determined based on a modal type corresponding to the initial remote sensing data.

In a further embodiment of the present disclosure, the data correction processing further includes: performing data compensation processing on the second initial data using the initial remote sensing data to generate the intermediate remote sensing data. The data compensation processing is performed to compensate ground feature information in the initial remote sensing data to the second initial data. The data compensation processing includes: performing spatial dimension compensation processing on the second initial data using the initial remote sensing data to generate first compensation data; and performing channel dimension compensation processing on the first compensation data to generate the intermediate remote sensing data.

In a further embodiment of the present disclosure, the performing spatial dimension compensation processing on the second initial data using the initial remote sensing data to generate first compensation data includes:

performing first feature extraction processing on the initial remote sensing data to generate third initial data, where the first feature extraction processing is performed to extract the ground feature information in the region of interest included in the initial remote sensing data;

concatenating the second initial data and the third initial data to generate first concatenated remote sensing data;

performing compensation and denoising processing on the first concatenated remote sensing data to generate a first spatial fusion feature;

performing second feature extraction processing on the first concatenated remote sensing data to generate a second spatial fusion feature, where the second feature extraction processing is performed to extract ground feature information in the region of interest included in the first concatenated remote sensing data;

performing spatial dimension data compensation on the second initial data based on the first spatial fusion feature to generate fourth initial data;

performing spatial dimension data compensation on the third initial data based on the second spatial fusion feature to generate fifth initial data; and

generating the first compensation data based on the fourth initial data and the fifth initial data.

In a further embodiment of the present disclosure, the performing channel dimension compensation processing on the first compensation data to generate the intermediate remote sensing data includes:

concatenating the fourth initial data and the fifth initial data to obtain second concatenated remote sensing data;

performing a full convolution operation on the second concatenated remote sensing data to generate sixth initial data; and

performing channel dimension data compensation on the sixth initial data based on the second concatenated remote sensing data to generate the intermediate remote sensing data.

In a further embodiment of the present disclosure, the generating the first compensation data based on the fourth initial data and the fifth initial data includes:

performing gradient enhancement processing on the fourth initial data using the third initial data to generate first gradient remote sensing data;

performing gradient enhancement processing on the fifth initial data using the second initial data to generate second gradient remote sensing data; and

generating the first compensation data based on the first gradient remote sensing data and the second gradient remote sensing data.

In a further embodiment of the present disclosure, the shared feature association network includes a shared feature fusion network. The obtaining, for each of the pieces of intermediate remote sensing data, a confidence value corresponding to the piece of intermediate remote sensing data using a shared feature association network includes:

for each of the pieces of intermediate remote sensing data,

generating, by the shared feature fusion network, an enhanced feature parameter corresponding to the piece of intermediate remote sensing data based on a semantic relationship between the feature parameters included in the piece of intermediate remote sensing data; and

generate the confidence value corresponding to the piece of intermediate remote sensing data based on the enhanced feature parameter.

According to a second aspect of the present disclosure, a fusion apparatus for multimodal remote sensing data based on dedicated and shared architecture is provided according to claim 7 hereto. The apparatus includes: a data obtaining module, a data correction module, a confidence value obtaining module, a data replacement module, and a data fusion module. The data obtaining module is configured to obtain multiple pieces of initial remote sensing data of a region of interest, where the multiple pieces of initial remote sensing data have different modal types. The data correction module is configured to perform, for each of the multiple pieces of initial remote sensing data, data correction processing on the initial remote sensing data using a dedicated network based on a modal type corresponding to the initial remote sensing data to generate a piece of intermediate remote sensing data corresponding to the initial remote sensing data, where all pieces of intermediate remote sensing data corresponding to the plurality pieces of initial remote sensing data have a same spatial dimension and a same channel dimension. The confidence value obtaining module is configured to obtain, for each of the pieces of intermediate remote sensing data, a confidence value corresponding to the piece of intermediate remote sensing data using a shared feature association network, where each of the pieces of intermediate remote sensing data includes multiple feature parameters, each of the feature parameters corresponds to a confidence value, and a confidence value of a piece of intermediate remote sensing data is determined based on representation strengths of feature parameters of the piece of intermediate remote sensing data to corresponding ground feature information in the region of interest. The data replacement module is configured to perform, for each of the pieces of intermediate remote sensing data, replacement processing on a target feature parameter in the piece of intermediate remote sensing data based on the confidence value of the piece of intermediate remote sensing data to generate a piece of sub fused remote sensing data corresponding to the piece of initial remote sensing data, where the target feature parameter corresponds to a confidence value less than a confidence threshold, and a confidence value corresponding to a feature parameter in the sub fused remote sensing data is greater than or equal to the confidence threshold. The data fusion module is configured to generate fused remote sensing data of the region of interest based on all pieces of sub fused remote sensing data and modal weights, where the modal weights are determined based on fusion ratios of sub fused remote sensing data having different modal types.

In a further embodiment of the present disclosure, the data correction module includes a normalization module and a first denoising module. The normalization module is configured to perform data normalization processing on the initial remote sensing data to generate first initial data, where each of parameters in the first initial data is within a preset range. The first denoising module is configured to perform data denoising processing on the first initial data to generate second initial data, where the data denoising processing is performed to reduce a parameter based on a value of the parameter, the value of the parameter is positively correlated with a reduction degree, and both the data normalization processing and the data denoising processing are determined based on a modal type corresponding to the initial remote sensing data.

In a further embodiment of the present disclosure, the data correction module further includes a data compensation module. The data compensation module is configured to perform data compensation processing on the second initial data using the initial remote sensing data to generate the intermediate remote sensing data. The data compensation processing is performed to compensate ground feature information in the initial remote sensing data to the second initial data. The data compensation module includes: a spatial compensation module and a channel compensation module. The spatial compensation module is configured to perform spatial dimension compensation processing on the second initial data using the initial remote sensing data to generate first compensation data. The channel compensation module is configured to perform channel dimension compensation processing on the first compensation data to generate the intermediate remote sensing data.

In a further embodiment of the present disclosure, the spatial compensation module includes: a first feature extraction module, a first concatenation module, a second denoising module, a second feature extraction module, a first compensation module, a second compensation module, and a first generation module. The first feature extraction module is configured to perform first feature extraction processing on the initial remote sensing data to generate third initial data, where the first feature extraction processing is performed to extract the ground feature information in the region of interest included in the initial remote sensing data. The first concatenation module is configured to concatenate the second initial data and the third initial data to generate first concatenated remote sensing data. The second denoising module is configured to perform compensation and denoising processing on the first concatenated remote sensing data to generate a first spatial fusion feature. The second feature extraction module is configured to perform second feature extraction processing on the first concatenated remote sensing data to generate a second spatial fusion feature, where the second feature extraction processing is performed to extract ground feature information in the region of interest included in the first concatenated remote sensing data. The first compensation module is configured to perform spatial dimension data compensation on the second initial data based on the first spatial fusion feature to generate fourth initial data. The second compensation module is configured to perform spatial dimension data compensation on the third initial data based on the second spatial fusion feature to generate fifth initial data. The first generation module is configured to generate the first compensation data based on the fourth initial data and the fifth initial data.

In a further embodiment of the present disclosure, the channel compensation module includes: a second concatenation module, a full convolution module, and a third compensation module. The second concatenation module is configured to concatenate the fourth initial data and the fifth initial data to obtain second concatenated remote sensing data. The full convolution module is configured to perform a full convolution operation on the second concatenated remote sensing data to generate sixth initial data. The third compensation module is configured to perform channel dimension data compensation on the sixth initial data based on the second concatenated remote sensing data to generate the intermediate remote sensing data.

In a further embodiment of the present disclosure, the first generation module includes: a first gradient enhancement module, a second gradient enhancement module, and a first generation sub module. The first gradient enhancement module is configured to perform gradient enhancement processing on the fourth initial data using the third initial data to generate first gradient remote sensing data. The second gradient enhancement module is configured to perform gradient enhancement processing on the fifth initial data using the second initial data to generate second gradient remote sensing data. The first generation sub module is configured to generate the first compensation data based on the first gradient remote sensing data and the second gradient remote sensing data.

In a further embodiment of the present disclosure, the shared feature association network includes a shared feature fusion network. The confidence value obtaining module includes: a feature enhancement module and a confidence generation module. The feature enhancement module is configured to, for each of the pieces of intermediate remote sensing data, generate, by the shared feature fusion network, an enhanced feature parameter corresponding to the piece of intermediate remote sensing data based on a semantic relationship between the feature parameters included in the piece of intermediate remote sensing data. The confidence generation module is configured to generate the confidence value corresponding to the piece of intermediate remote sensing data based on the enhanced feature parameter.

According to a third aspect of the present disclosure, a non-transient computer-readable storage medium is provided. The non-transient computer-readable storage medium stores a computer program. The computer program, when executed by a processor, causes the processor to perform the fusion method for multimodal remote sensing data based on dedicated and shared architecture described above.

According to a fourth aspect of the present disclosure, an electronic device is provided according to claim 13 hereto. The electronic device includes: a memory, a processor, and a computer program stored in the memory and capable of being executed by the processor. The processor is configured to, when executing the computer program, perform the fusion method for multimodal remote sensing data based on dedicated and shared architecture described above.

According to the present disclosure, at least the following beneficial effects can be achieved.

In the fusion method for multimodal remote sensing data based on dedicated and shared architecture according to the present disclosure, for each of the multiple pieces of initial remote sensing data, data correction processing is performed on the initial remote sensing data using a dedicated network corresponding to the initial remote sensing data. Thus, remote sensing data having different modal types may be mapped to a same high-dimension feature space, that is, intermediate remote sensing data corresponding to the initial remote sensing data is generated. In addition, due to that all the initial remote sensing data have a same spatial dimension and a same channel dimension, the remote sensing data having different modal types are aligned in the data correction processing, facilitating performing accurate replacement processing on the target feature parameter in each of the pieces of intermediate remote sensing data. In addition, noise parameters in the remote sensing data having different modal types may be removed in the data correction processing, improving the accuracy of the final obtained fused remote sensing data.

After obtaining the intermediate remote sensing data, a confidence value corresponding to each of the pieces of intermediate remote sensing data may be obtained using a shared feature association network. Then, based on the confidence value corresponding to each of the pieces of intermediate remote sensing data, replacement processing is performed on a target feature parameter in each of the pieces of intermediate remote sensing data. Thus, the target feature parameters, corresponding to the initial remote sensing data having different modal types and not meeting the use requirements, are optimally replaced, promoting the interaction and fusion of data having different modal types, and thereby improving the intensity and accuracy sub fused remote sensing data having different modal types for each piece of ground feature information in the region of interest. Finally, the sub fused remote sensing data having different modal types are fused with different modal weights, further improving the richness and accuracy of the finally fused remote sensing data in representing each piece of ground feature information in the region of interest.

Therefore, data correction processing is performed on each of the pieces of initial remote sensing data and fusion processing is performed on the remote sensing data having different modal types, any combination of modal remote sensing data can be used, and fused remote sensing data with higher richness and accuracy in representing the ground feature information is generated, improving the availability of the fused remote sensing data to facilitate the fused remote sensing data adapting to various remote sensing interpretation tasks, and improving the efficiency of earth observation.

## BRIEF DESCRIPTION OF THE DRAWINGS

In order to clearly illustrate the technical solutions in the embodiments of the present disclosure, drawings to be used in the description of the embodiments of the present disclosure are briefly described hereinafter. It is apparent that the drawings in the following description show only some embodiments of the present disclosure. Those skilled in the art can obtain other drawings based on these drawings without any creative efforts.

Figure 1 is a flow chart of a fusion method for multimodal remote sensing data based on dedicated and shared architecture according to an embodiment of the present disclosure;

Figure 2 is a flow chart of a fusion method for multimodal remote sensing data based on dedicated and shared architecture according to another embodiment of the present disclosure;

Figure 3 is a flow chart of a fusion method for multimodal remote sensing data based on dedicated and shared architecture according to another embodiment of the present disclosure;

Figure 4 is a flow chart of a fusion method for multimodal remote sensing data based on dedicated and shared architecture according to another embodiment of the present disclosure;

Figure 5 is a flow chart of a fusion method for multimodal remote sensing data based on dedicated and shared architecture according to another embodiment of the present disclosure;

Figure 6 is a flow chart of a fusion method for multimodal remote sensing data based on dedicated and shared architecture according to another embodiment of the present disclosure;

Figure 7 is a flow chart of a fusion method for multimodal remote sensing data based on cross domain sharing according to an embodiment of the present disclosure;

Figure 8 is a flow chart of a fusion method for multimodal remote sensing data based on cross domain sharing according to another embodiment of the present disclosure;

Figure 9 is a flow chart of a fusion method for multimodal remote sensing data based on cross domain sharing according to another embodiment of the present disclosure;

Figure 10 is a flow chart of a fusion method for multimodal remote sensing data based on cross domain sharing according to another embodiment of the present disclosure;

Figure 11 is a flow chart of a fusion method for multimodal remote sensing data based on cross domain sharing according to another embodiment of the present disclosure;

Figure 12 is a flow chart of a fusion method for multimodal remote sensing data based on cross domain sharing according to another embodiment of the present disclosure;

Figure 13 is a flow chart of a fusion method for multimodal remote sensing data based on cross domain sharing according to another embodiment of the present disclosure;

Figure 14 is a flow chart of a fusion method for multimodal remote sensing data based on cross domain sharing according to another embodiment of the present disclosure;

Figure 15 is a schematic structural diagram of a fusion apparatus for multimodal remote sensing data based on dedicated and shared architecture according to an embodiment of the present disclosure;

Figure 16 is a schematic structural diagram of a fusion apparatus for multimodal remote sensing data based on dedicated and shared architecture according to another embodiment of the present disclosure;

Figure 17 is a schematic structural diagram of a fusion apparatus for multimodal remote sensing data based on dedicated and shared architecture according to another embodiment of the present disclosure;

Figure 18 is a schematic structural diagram of a fusion apparatus for multimodal remote sensing data based on dedicated and shared architecture according to another embodiment of the present disclosure;

Figure 19 is a schematic structural diagram of a fusion apparatus for multimodal remote sensing data based on dedicated and shared architecture according to another embodiment of the present disclosure;

Figure 20 is a schematic structural diagram of a fusion apparatus for multimodal remote sensing data based on dedicated and shared architecture according to another embodiment of the present disclosure;

Figure 21 is a schematic structural diagram of a fusion apparatus for multimodal remote sensing data based on dedicated and shared architecture according to another embodiment of the present disclosure;

Figure 22 is a schematic structural diagram of a fusion apparatus for multimodal remote sensing data based on cross domain sharing according to an embodiment of the present disclosure;

Figure 23 is a schematic structural diagram of a fusion apparatus for multimodal remote sensing data based on cross domain sharing according to another embodiment of the present disclosure;

Figure 24 is a schematic structural diagram of a fusion apparatus for multimodal remote sensing data based on cross domain sharing according to another embodiment of the present disclosure;

Figure 25 is a schematic structural diagram of a fusion apparatus for multimodal remote sensing data based on cross domain sharing according to another embodiment of the present disclosure;

Figure 26 is a schematic structural diagram of a fusion apparatus for multimodal remote sensing data based on cross domain sharing according to another embodiment of the present disclosure;

Figure 27 is a schematic structural diagram of a fusion apparatus for multimodal remote sensing data based on cross domain sharing according to another embodiment of the present disclosure;

Figure 28 is a schematic structural diagram of a fusion apparatus for multimodal remote sensing data based on cross domain sharing according to another embodiment of the present disclosure;

Figure 29 is a schematic structural diagram of a fusion apparatus for multimodal remote sensing data based on cross domain sharing according to another embodiment of the present disclosure; and

Figure 30 is a flow chart of a fusion method for multimodal remote sensing data based on dedicated and shared architecture according to another embodiment of the present disclosure.

DETAILED DESCRIPTION

Hereafter, the embodiments of the present disclosure are described clearly and completely in conjunction with the drawings of the embodiments of the present disclosure. It is apparent that the described embodiments are only a part of the embodiments of the present disclosure, rather than all embodiments. Based on the embodiments in the present disclosure, all other embodiments obtained by those skilled in the art without any creative efforts fall within the protection scope of the present disclosure.

**EP 4 390 866 B1**

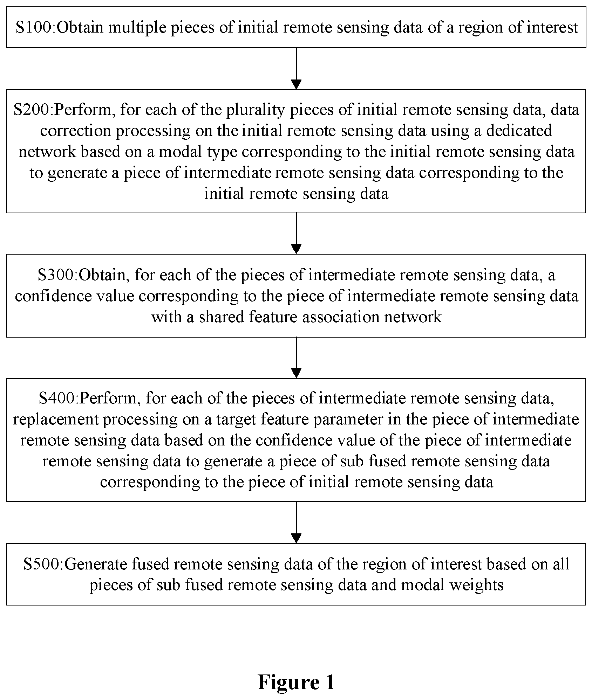

In an embodiment of the present disclosure, as shown in Figure 1, a fusion method for multimodal remote sensing data based on dedicated and shared architecture is provided. The method includes the following steps S100 to S500.

In S100, multiple pieces of initial remote sensing data of a region of interest are obtained. The multiple pieces of initial remote sensing data have different modal types.

Specifically, the multiple pieces of initial remote sensing data of the region of interest may be obtained with various imaging devices arranged on remote sensing satellites. A piece of initial remote sensing data is a remote sensing image, and the modal type of the initial remote sensing data includes a SAR (Synthetic Aperture Radar) type, a hyperspectral type, an optical type, an infrared type, and the like. In an embodiment, the multiple pieces of initial remote sensing data are image data obtained by collecting a same region of interest at a same time instant. Thus, it may be further ensured that the multiple pieces of initial remote sensing data represent data in different forms for the same ground feature information.

In S200, for each of the plurality pieces of initial remote sensing data, data correction processing is performed on the initial remote sensing data using a dedicated network based on a modal type corresponding to the initial remote sensing data to generate a piece of intermediate remote sensing data corresponding to the initial remote sensing data. All pieces of intermediate remote sensing data corresponding to the multiple pieces of initial remote sensing data have a same spatial dimension and a same channel dimension.

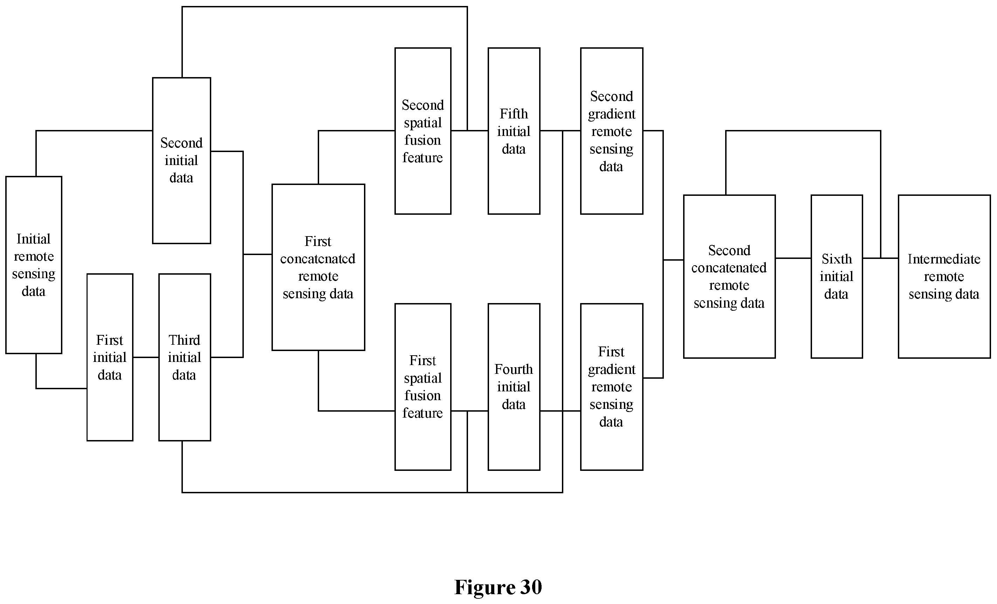

As shown in Figure 30, data correction processing is performed on the multiple pieces of initial remote sensing data to map the remote sensing data having different modal types to a same high-dimension data space, so that the remote sensing data having different modal types are aligned, facilitating performing accurate replacement processing on the target feature parameter in each of the pieces of intermediate remote sensing data in subsequent steps.

Specifically, multimodal data having different dimension types may be mapped to a same high-dimension data space by using the conventional data dimension transformation method. For example, the conventional convolutional neural network may be used to perform data dimension transformation.

Considering the limitations of imaging mechanisms of different sensors in the multimodal remote sensing process, noise parameters in different forms may exist in the obtained remote sensing data. For example, noise parameters corresponding to scattering blur may exist in SAR data, noise parameters corresponding to spectral confusion may exist in hyperspectral data, noise parameters corresponding to frequency offset spurious may exist in optical data, and noise parameters corresponding to radiation disturbances may exist in infrared data. Therefore, for each modal type of remote sensing data, a dedicated network is designed in designing the convolutional neural network to perform denoising processing and perform data dimension transformation.

For the noise parameters corresponding to scattering blur in SAR data and the noise parameters corresponding to spectral confusion in hyperspectral data, these imaging noises are usually manifested as large-amplitude data. In the remote sensing data having a corresponding modal type, the feature parameters of the region of interest are also large-amplitude data, which representing a strong feature region. In extracting features with the neural network, attention is usually paid to large-amplitude regions, resulting in the imaging noise seriously affecting the ground feature extraction in the interpretation process.

In performing data dimension transformation by using the convolutional neural network, feature extraction may be performed. The convolutional neural network may further extract certain target information from the remote sensing data, that is, filtering processing may be performed to filter noises. Therefore, data correction processing is performed on the remote sensing data to remove noise data, thereby improving the accuracy of the remote sensing data having different modal types. In addition, due to the difference in the appearance of imaging noise (noise parameters) in the remote sensing data of different modal types, it is required to perform the data correction processing on the initial remote sensing data corresponding to each of the modal types with a dedicated convolutional neural network.

In S300, for each of the pieces of intermediate remote sensing data, a confidence value corresponding to the piece of intermediate remote sensing data is obtained with a shared feature association network. Each of the pieces of intermediate remote sensing data includes multiple feature parameters. Each of the feature parameters corresponds to a confidence value. A confidence value of a piece of intermediate remote sensing data is determined based on representation strengths of feature parameters of the piece of intermediate remote sensing data to corresponding ground feature information in the region of interest. A confidence value of a piece of intermediate remote sensing data represents a representation strength of a feature parameter of the piece of intermediate remote sensing data to corresponding ground feature information in the region of interest. The target feature parameter corresponds to a confidence value less than a confidence threshold. The feature parameter in the embodiment may correspond to a pixel in a remote sensing image or corresponds to a region in the remote sensing image. The feature value may be obtained by performing a conventional method, such as by performing convolution.

In a further embodiment of the present disclosure, the shared feature association network includes a shared feature fusion network.

The step S300 of obtaining, for each of the pieces of intermediate remote sensing data, a confidence value corresponding to the piece of intermediate remote sensing data with a shared feature association network includes the following steps S301 and S302.

In S301, for each of the pieces of intermediate remote sensing data, the shared feature fusion network generates an enhanced feature parameter corresponding to the piece of intermediate remote sensing data based on a semantic relationship between the feature parameters included in the piece of intermediate remote sensing data.

Specifically, the shared feature fusion network extracts enhanced feature parameters from the pieces of intermediate remote sensing data having different modal types. The shared feature fusion network may be realized based on sharing network parameters. The enhanced feature parameters are feature parameters with increased global attention.

In S302, the confidence value corresponding to the piece of intermediate remote sensing data is generated based on the enhanced feature parameter.

In S400, for each of the pieces of intermediate remote sensing data, replacement processing is performed on a target feature parameter in the piece of intermediate remote sensing data based on the confidence value of the piece of intermediate remote sensing data to generate a piece of sub fused remote sensing data corresponding to the piece of initial remote sensing data. The target feature parameter corresponds to a confidence value less than a confidence threshold. A confidence value corresponding to a feature parameter in the sub fused remote sensing data is greater than or equal to the confidence threshold. In an embodiment, the feature parameter is the enhanced feature parameter.

In an embodiment, for each of the pieces of intermediate remote sensing data, a confidence value corresponding to an enhanced feature parameter included in the piece of intermediate remote sensing data may be calculated based on the enhanced feature parameter. In a case that a confidence value corresponding to an enhanced feature parameter included in a piece of intermediate remote sensing data does not meet a usage condition, an enhanced feature parameter at a same position in a piece of intermediate remote sensing data having another modal type can be used to replace the target feature parameter. Apparently, due to the differences in data of different modal types, it is required to perform conversion on the replacing data to convert a data form the replacing data to the data form corresponding to the modal type of the target feature parameter in the replacement process. Specifically, a shallow multilayer perceptron (MLP) may be arranged to perform data conversion between data of different modal types, so that accurate sub fusion remote sensing data, after replacement, of each of the modal types is obtained.

In S500, fused remote sensing data of the region of interest is generated based on all pieces of sub fused remote sensing data and modal weights. The modal weights are determined based on fusion ratios of sub fused remote sensing data having different modal types. The modal weights represent the fusion ratios of sub fused remote sensing data having different modal types.

The modal weights may be manually configured according to usage scenarios. Usually, the modal weights are configured based on imaging mechanism of pieces of sub fused remote sensing data. Usually, data in the optical modal type includes detailed ground feature information, and data in the SAR modal types has a clear target structure. Therefore, for the data of the SAR modal type, the data of hyperspectral modal type, the data of optical modal type and the data of infrared modal type, the corresponding modal weights meet the condition of A1>A2>A3>A4, where A1 represents a modal weight corresponding to the data of optical modal type, A2 represents a modal weight corresponding to the data of SAR modal type, A3 represents a modal weight corresponding to the data of hyperspectral modal type, and A4 represents a modal weight corresponding to the data of infrared modal type.

Alternatively, a learnable initial modal weight parameter item may be configured in the initial neural network, and then modal weights corresponding to all pieces of sub fused remote sensing data may be obtained through training. In configuring initial modal weights, a corresponding number of initial modal weights may be configured based on the data of all modal types included in training data. Thus, modal weights corresponding to all current modal types may be obtained after training. In a case that the training data includes data of the SAR modal type, data of the hyperspectral modal type, data of the optical modal type and data of the infrared modal type, modal weights corresponding to the above four modal types are outputted.

Therefore, with the fusion method for multimodal data based on dedicated and shared architecture according to the present disclosure, remote sensing data of any combination of modal types can be fused to obtain fused remote sensing data accurately representing ground feature information. Since more modal information is fused in the fused remote sensing data and the representation accuracy of each piece of modal information is improved, the fused remote sensing data may be applied to more remote sensing interpretation tasks, and more accurate interpretation results can be obtained.

In addition, the method in the embodiments facilitates subsequent adaptive expanding modal types. Thus, based on the remote sensing data of different modal types, remote sensing data of a new modal type may be adaptively and timely added to the solutions in the embodiments according to the present disclosure.

Specifically, in a case of adding a new modal type of remote sensing data to the solutions in the embodiments according to the present disclosure, it is required to configure a corresponding dedicated neural convolutional network based on the representation of noise parameters in the new modal type of remote sensing data to perform data correction processing. Simple adaptive adjustment is performed on the original network. Then, incremental training is performed on the current network based on training data that includes the new modal type of remote sensing data and the original modal types of remote sensing data, thereby adaptively expanding the original modal types.

In the fusion method for multimodal remote sensing data based on dedicated and shared architecture according to the present disclosure, for each of the multiple pieces of initial remote sensing data, data correction processing is performed on the initial remote sensing data. Thus, remote sensing data having different modal types may be mapped to a same high-dimension feature space. In addition, due to that all the initial remote sensing data have a same spatial dimension and a same channel dimension, the remote sensing data having different modal types are aligned in the data correction processing, facilitating performing accurate replacement processing on the target feature parameter in each of the pieces of intermediate remote sensing data. In addition, noise parameters in the remote sensing data having different modal types may be removed in the data correction processing, improving the accuracy of the final obtained fused remote sensing data.

After obtaining the intermediate remote sensing data, a confidence value corresponding to each of the pieces of intermediate remote sensing data may be obtained using a shared feature association network. Then, based on the confidence value corresponding to each of the pieces of intermediate remote sensing data, replacement processing is performed on a target feature parameter in each of the pieces of intermediate remote sensing data. Thus, the target feature parameters, corresponding to the initial remote sensing data having different modal types and not meeting the use requirements, are optimally replaced, promoting the interaction and fusion of data having different modal types, and thereby improving the intensity and accuracy sub fused remote sensing data having different modal types for each piece of ground feature information in the region of interest. Finally, the sub fused remote sensing data having different modal types are fused with different modal weights, further improving the richness and accuracy of the finally fused remote sensing data in representing each piece of ground feature information in the region of interest.

Therefore, data correction processing is performed on each of the pieces of initial remote sensing data and fusion processing is performed on the remote sensing data having different modal types, any combination of modal remote sensing data can be used, and fused remote sensing data with higher richness and accuracy in representing the ground feature information is generated, improving the availability of the fused remote sensing data to facilitate the fused remote sensing data adapting to various remote sensing interpretation tasks, and improving the efficiency of earth observation.

According to the conventional technology, differences in the description of the "time-space-spectrum" features observed by different remote sensing payloads may result in poor semantic feature generalization of multimodal remote sensing data. Therefore, it is required to perform multiple calls to interpret different modal combination of data, resulting in low system processing efficiency, and not meeting the timeliness requirements of modern remote sensing systems. The fused remote sensing data generated in the present disclosure has high semantic feature generalization due to fusing multiple modal feature information, so that different modal combination of data can be Interpreted without performing multiple calls, thereby improving the efficiency of Earth observation.

In addition, the method according to the embodiments of the present disclosure may be performed by using the open-source self-developed AI framework of mindspore in China, thereby adapting to the localization of multimodal remote sensing data interpretation systems and improving the performance of downstream interpretation tasks.

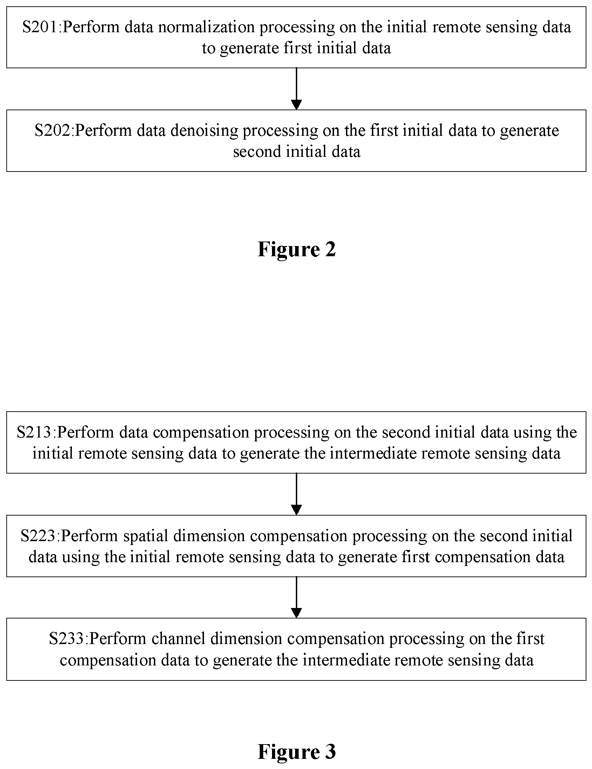

In an embodiment of the present disclosure, as shown in Figure 2, the data correction processing includes the following steps S201 and S202.

In S201, data normalization processing is performed on the initial remote sensing data to generate first initial data. Each of parameters in the first initial data is within a preset range.

Specifically, in the embodiment, instance normalization is performed to roughly align the feature parameters in the initial remote sensing data. The instance normalization is performed based on the following equation:

$$x_s^{\mathrm{n}} = \mathrm{IN}(x_s) = \gamma \frac{x_s - \mu(x_s)}{\sigma(x_s)} + \beta$$

where $x_s$ represents a feature (feature parameter) in the inputted initial remote sensing data, $x_s^{\mathrm{n}}$ represents a feature parameter in a first initial data, IN() represents an instance normalization function, $\mu()$ and $\sigma()$ respectively represent an average and a standard deviation of a feature parameter on each of channels calculated in a spatial dimension, and $\gamma$ and $\beta$ respectively parameters obtained through training. The instance normalization is performed in the feature space to realize style regularization based on statistical information. Since each of features may be considered as a style, features are consistent with instance regularization, thus reducing differences in feature representation.

In S202, data denoising processing is performed on the first initial data to generate second initial data. The data denoising processing is performed to reduce a parameter based on a value of the parameter. The value of the parameter is positively correlated with a reduction degree. Both the data normalization processing and the data denoising processing are determined based on a modal type corresponding to the initial remote sensing data.

The data denoising processing may be performed by using a dedicated convolutional neural network that is configured based on the modal type. In convolution process, noise data in the first initial data may be filtered out to improve the accuracy of the first initial data.

In the embodiment, the normalization processing and the data denoising processing are performed to suppress or even remove noise in the initial remote sensing data of each of the modal types, thereby improving the data accuracy of corresponding intermediate remote sensing data and further improving the accuracy of interpretation.

In an embodiment of the present disclosure, as shown in Figure 3, the data correction processing further includes the following step S213.

In S213, data compensation processing is performed on the second initial data using the initial remote sensing data to generate the intermediate remote sensing data. The data compensation processing is performed to compensate ground feature information in the initial remote sensing data to the second initial data.

The data compensation processing includes the following steps S223 and S233.

In S223, spatial dimension compensation processing is performed on the second initial data using the initial remote sensing data to generate first compensation data.

In S233, channel dimension compensation processing is performed on the first compensation data to generate the intermediate remote sensing data.

Usually, due to that both imaging noise and discrimination information in the initial remote sensing data are large-amplitude data, after steps S201 and S202 are performed, it is inevitable to remove discrimination information, which is not noise parameters, from the remote sensing data. Thus, it is required to perform data compensation processing to compensate and recover the removed discrimination information, thereby further improving the data accuracy of corresponding intermediate remote sensing data.

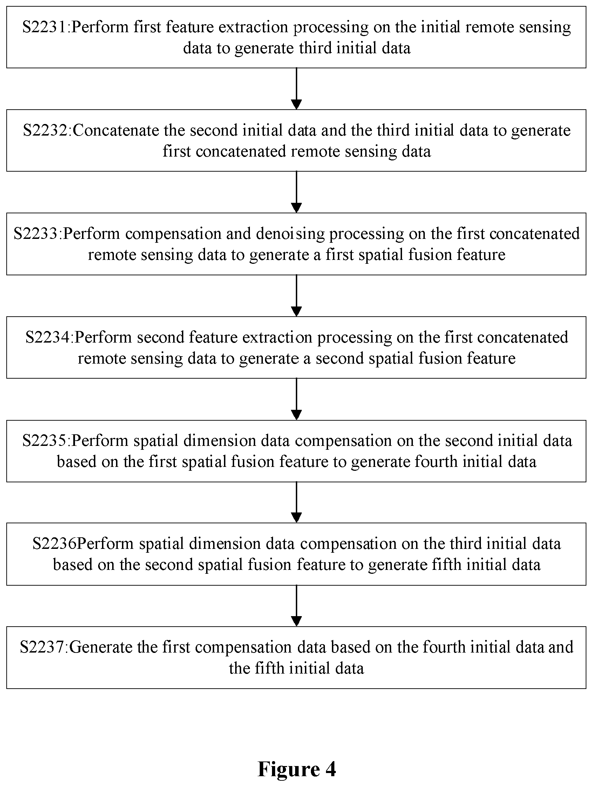

In an embodiment of the present disclosure, as shown in Figure 4, the step S223 in which spatial dimension compensation processing is performed on the second initial data using the initial remote sensing data to generate the first compensation data includes the following steps S2231 to S2237.

In S2231, first feature extraction processing is performed on the initial remote sensing data to generate third initial data. The first feature extraction processing is performed to extract the ground feature information in the region of interest included in the initial remote sensing data.

Specifically, the first feature extraction processing is performed by performing a convolutional operation on the initial remote sensing data with a convolutional neural network to extract non-noisy discrimination information from the initial remote sensing data, that is, to extract target ground feature information from the initial remote sensing data.

In S2232, the second initial data and the third initial data are concatenated to generate first concatenated remote sensing data.

Specifically, the second initial data and the third initial data are concatenated in the channel dimension.

In S2233, compensation and denoising processing is performed on the first concatenated remote sensing data to generate a first spatial fusion feature.

In S2234, second feature extraction processing is performed on the first concatenated remote sensing data to generate a second spatial fusion feature. The second feature extraction processing is performed to extract ground feature information in the region of interest included in the first concatenated remote sensing data.

In S2235, spatial dimension data compensation is performed on the second initial data based on the first spatial fusion feature to generate fourth initial data.

Specifically, in the embodiment, the first spatial fusion feature and the second initial data have the same spatial dimension and the channel dimension. Thus, parameters at corresponding positions in the first spatial fusion feature and in the second initial data are multiplied to obtain the fourth initial data.

In S2236, spatial dimension data compensation is performed on the third initial data based on the second spatial fusion feature to generate fifth initial data.

Similarly, the second spatial fusion feature and the third initial data have the same spatial dimension and the channel dimension. The operations performed for data compensating of the second spatial fusion feature and the third initial data spatial dimension data are the same as the operations performed for data compensating of the first spatial fusion feature and the second initial data spatial dimension data.

In S2237, the first compensation data is generated based on the fourth initial data and the fifth initial data.

Specifically, a first attention map A (that is, the first spatial fusion feature) and $A^n$ (that is, the second spatial fusion feature) may be obtained based on the following equation:

$$ A = sigmoid(W_0 * [\hat{x}_s, \hat{x}_s^n]) $$

where * represents a convolution operation, $W_0$ represents a weight matrix of a convolution kernel corresponding to the generated first spatial fusion feature, [] represents a concatenation operation, $\hat{x}_s$ represents the third initial data, and $\hat{x}_s^{\mathrm{n}}$ represents the second initial data.

Spatial dimension data compensation is performed on the second initial data based on A to generate fourth initial data by using the following equation:

$$x'_s = \hat{x}_s^{\mathrm{n}} \cdot A$$

where $x'_s$ represents the fourth initial data, and "·" represents a multiplication operation between elements that correspond to each other in the spatial dimension. The spatial dimension in the present disclosure refers to a data dimension of a spatial resolution of data. The spatial resolution is determined based on a spatial length and a spatial width of the data. The channel dimension refers to a data dimension of a channel of the data. Taking 1024*1024*3 data as an example, 1024*024 represents the spatial resolution of the data, and 3 represents the number of channels of the data.

The processes of generating $A^{\mathrm{n}}$ and generating the fifth initial data $x_s^{\mathrm{n}\prime}$ are similar to the processes of generating A and $x'_s$, and are not be repeated herein. The only difference is that a weight matrix $W_3$ of a convolutional kernel corresponding to the generated second spatial fusion feature is not the same as $W_0$. Specifically, $W_0$ is a convolutional network that is constructed based on the existing convolutional kernels and may further remove noise from the first concatenated remote sensing data through convolutional operations. $W_3$ is a convolutional network that is constructed based on the existing convolutional kernels and may further extract discrimination information (that is not noise) from the first concatenated remote sensing data through convolutional operations.

In the embodiment, the first concatenated remote sensing data is obtained by concatenating the data features in the initial remote sensing data after performing denoising processing and the discrimination information features after performing the initial feature extraction. Thus, the feature information in the initial remote sensing data may be fused with the denoised information in the first concatenated remote sensing data. Then, a second denoising processing (the compensation and denoising processing) may be performed on the first concatenated remote sensing data, so that all denoised features of the first concatenated remote sensing data may be further fused in the first spatial fusion feature. By performing the second feature extraction on the first concatenated remote sensing data, all features extracted from the first concatenated remote sensing data may be further fused in the second spatial fusion feature.

In the embodiment, the second denoising processing is performed for realizing denoising same as the data denoising processing in the above embodiments. The denoising operations in the second denoising processing are similar to the operations in the data denoising processing, that is, the used convolutional operators are similar. The parameters in the convolutional kernels are obtained through training and are different. Similarly, both the first feature extraction processing and the second feature extraction processing are performed for realizing feature extraction, so that the corresponding feature operations are similar. That is, the used convolutional operators are similar. The parameters in the convolutional kernels are obtained through training and are different.

The first spatial fusion feature and the second spatial fusion feature have the same spatial dimension, and the second spatial fusion feature and the third spatial fusion feature have the same spatial dimension. Then, data is performed the spatial dimension to restore the effective information that has been mistakenly removed in the spatial dimension, thereby realizing compensation of data after regularization in the spatial dimension.

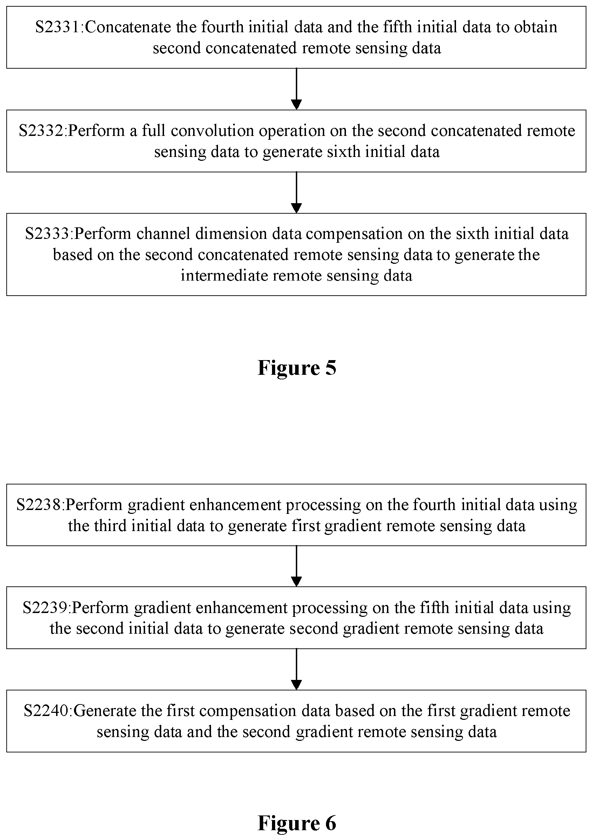

In an embodiment of the present disclosure, as shown in Figure 5, the step S233 in which channel dimension compensation processing is performed on the first compensation data to generate the intermediate remote sensing data includes the following steps S2331 to S2333.

In S2331, the fourth initial data and the fifth initial data are concatenated to obtain second concatenated remote sensing data.

Specifically, the fourth initial data and the fifth initial data are concatenated in the channel dimension, so that the data after compensation in the spatial dimension may be fused.

In S2332, a full convolution operation is performed on the second concatenated remote sensing data to generate sixth initial data.

The full convolution operation is performed to adjust the data dimension of the second concatenated remote sensing data, thereby adjusting the channel dimension of the data. The spatial dimension and the channel dimension of the sixth initial data are same as the predetermined spatial dimension and channel dimension of the intermediate remote sensing data, such as $W_Y*H_Y*D_Y$.

Specifically, the sixth initial data $A_x$ is obtained based on a fully convolutional network parameterized by $W_1$ and $W_2$, and may be expressed as:

$$A_x = sigmoid(W_2 * relu(W_1 * [x'_s, x^{n'}_s]))$$

where the full name of relu() is Rectified Linear Unit, which is a commonly used activation function in an artificial neural network.

In S2333, channel dimension data compensation is performed on the sixth initial data based on the second concatenated remote sensing data to generate the intermediate remote sensing data.

In the above step, the second concatenated remote sensing data are added in the channel dimension, transforming multiple channels to one dimension. Thus, the intermediate concatenated data is generated in the form of $W_Y*H_Y*1$. Then, normalization processing is performed on the intermediate concatenated data to normalize each of parameters to a predetermined range, such as [0, 1]. Then, the normalized intermediate concatenated data is multiplied by parameters at corresponding positions of matrices on each of channels in the sixth initial data, thereby performing data compensation in the channel dimension.

Specifically, the intermediate remote sensing data is generated based on the following equation:

$$x^{cor}_s = A_x \cdot [x'_s, x^{n'}_s]$$

where $x^{cor}_s$ represents the intermediate remote sensing data.

In the embodiment, the data is further compensated in the channel dimension, so that the difference between the feature representation of the strong feature region and the feature representation of the weak feature region in the obtained intermediate remote sensing data is reduced after performing compensation and fusion in the spatial dimension and in the channel dimension, thereby reducing the imaging noise, improving the accuracy of the remote sensing data, and further facilitating the subsequent collaborative interpretation of multimodal remote sensing data.

In an embodiment of the present disclosure, as shown in Figure 6, the step S2237 in which the first compensation data is generated based on the fourth initial data and the fifth initial data includes the following steps S2238 to S2240.

In S2238, gradient enhancement processing is performed on the fourth initial data using the third initial data to generate first gradient remote sensing data.

In S2239, gradient enhancement processing is performed on the fifth initial data using the second initial data to generate second gradient remote sensing data.

In S2240, the first compensation data is generated based on the first gradient remote sensing data and the second gradient remote sensing data.

The gradient enhancement processing in the embodiment may be performed by performing an addition operation or a multiplication operation on two pieces of data on which the gradient enhancement processing is to be performed.

In an embodiment, an addition operation is performed on two pieces of data.

After performing the addition operation, the initial features do not disappear regardless of whether subsequent features exist. After performing the multiplication operation, in a case that the subsequent features do not exist, the multiplication result does not exist. Therefore, the addition operation is conducive to solving the gradient vanishing problem in the backpropagation process.

Specifically, in a case that the gradient enhancement processing is performed by performing the multiplication operation, in taking a derivative of a loss function in the neural network, the gradient quickly approaches 0 if several partial derivatives are very small, resulting in the gradient easily disappearing. Due to that the weight of the neural network is update along a negative direction of the gradient, the update stagnates when there is no gradient, not facilitating the training of the neural network.

In a case that the gradient enhancement processing is performed by performing the addition operation, in taking a derivative of a loss function in the neural network, the condition for the gradient to approach 0 is relatively harsh. In summary, based on a residual structure of the addition operation, the problem of gradient disappearance is not solved, and the problem is only alleviated to some extent by avoiding the situation of gradient disappearance.

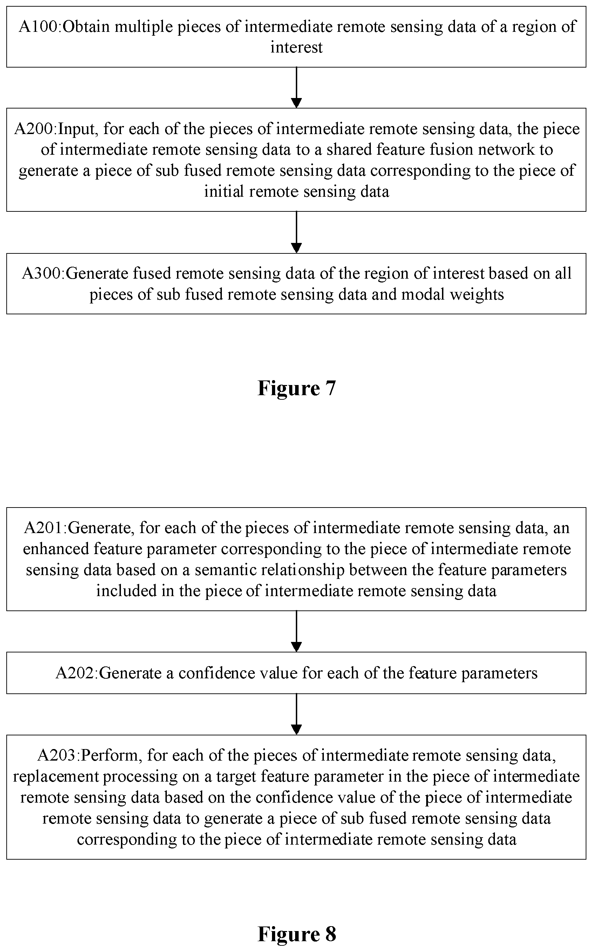

According to a third aspect of the present disclosure, as shown in Figure 7, after performing the step S200, the steps S300 and S400 may be performed with a multimodal remote sensing data fusion method based on cross domain sharing. The multimodal remote sensing data fusion method based on cross domain sharing includes the following steps A100 to A300.

In A100, multiple pieces of intermediate remote sensing data of a region of interest are obtained. The multiple pieces of intermediate remote sensing data have different modal types. All pieces of intermediate remote sensing data corresponding have a same spatial dimension and a same channel dimension.

In this step, the multiple pieces of intermediate remote sensing data generated in step S200 may be directly obtained.

In A200, for each of the pieces of intermediate remote sensing data, the piece of intermediate remote sensing data is inputted to a shared feature fusion network to generate a piece of sub fused remote sensing data corresponding to the piece of initial remote sensing data. A confidence value corresponding to a feature parameter in the sub fused remote sensing data is greater than or equal to a confidence threshold.

In A300, fused remote sensing data of the region of interest is generated based on all pieces of sub fused remote sensing data and modal weights. The modal weights are determined based on fusion ratios of sub fused remote sensing data having different modal types.

The step A300 is similar to the step S400, and is not be repeated herein.

As shown in Figure 8, the shared feature fusion network is configured to perform the following steps A201 to A203.

In A201, for each of the pieces of intermediate remote sensing data, an enhanced feature parameter corresponding to the piece of intermediate remote sensing data is generated based on a semantic relationship between the feature parameters included in the piece of intermediate remote sensing data. Specifically, the feature parameters included in the piece of intermediate remote sensing data are intermediate feature parameters.

This step is performed with the conventional self-attention feedforward network. The self-attention feedforward network may be a network for an encoding part of a Transformer model. Specifically, the self-attention feedforward network includes a MSA (multi-headed self-attention) operator and a FNN (feedforward neural network). Therefore, a global attention corresponding to each of the initial feature parameters may be generated based on the semantic relationships between all the initial feature parameters in each of the pieces of intermediate remote sensing data. After corresponding feature parameters are generated based on each of the initial feature parameters and the corresponding global attention, so that each of the initial feature parameters may be enhanced or weakened based on the corresponding global attention. Furthermore, the obtained feature parameters may accurately represent the semantic features of the intermediate remote sensing data.

In A202, a confidence value is generated for each of the feature parameters. A confidence value of a piece of intermediate remote sensing data is determined based on representation strengths of enhanced feature parameters of the piece of intermediate remote sensing data to corresponding ground feature information in the region of interest. A confidence value of a piece of intermediate remote sensing data represents a representation strength of a enhanced feature parameter of the piece of intermediate remote sensing data to corresponding ground feature information in the region of interest.

For each of modal types, a corresponding dedicated confidence acquisition neural network is configured. The neural network may be the conventional MLP (Multilayer Perceptron). Thus, each of the enhanced feature parameters may be inputted to generate a confidence value corresponding to the enhanced feature parameter.

In A203, for each of the pieces of intermediate remote sensing data, replacement processing is performed on a target feature parameter in the piece of intermediate remote sensing data based on the confidence value of the piece of intermediate remote sensing data to generate a piece of sub fused remote sensing data corresponding to the piece of intermediate remote sensing data. The target feature parameter corresponds to an enhanced confidence value less than a confidence threshold.

Specifically, in practices, the confidence threshold may be configured according to the usage scenarios. In an embodiment, the confidence threshold may be configured as $\theta = 10^{-2}$.

In the embodiment, for each of the pieces of intermediate remote sensing data, a confidence value corresponding to an enhanced feature parameter included in the piece of intermediate remote sensing data may be calculated based on the enhanced feature parameter. In a case that a confidence value corresponding to an enhanced feature parameter included in a piece of intermediate remote sensing data does not meet a usage condition, that is, the confidence value is less than $10^{-2}$, an enhanced feature parameter at a same position in a piece of intermediate remote sensing data having another modal type can be used to replace the target feature parameter. Apparently, due to the differences in data of different modal types, it is required to perform conversion on the replacing data to convert a data form the replacing data to the data form corresponding to the modal type of the target feature parameter in the replacement process. Specifically, a MLP may be arranged to perform data conversion between data of different modal types, so that accurate sub fusion remote sensing data, after replacement, of each of the modal types is obtained.

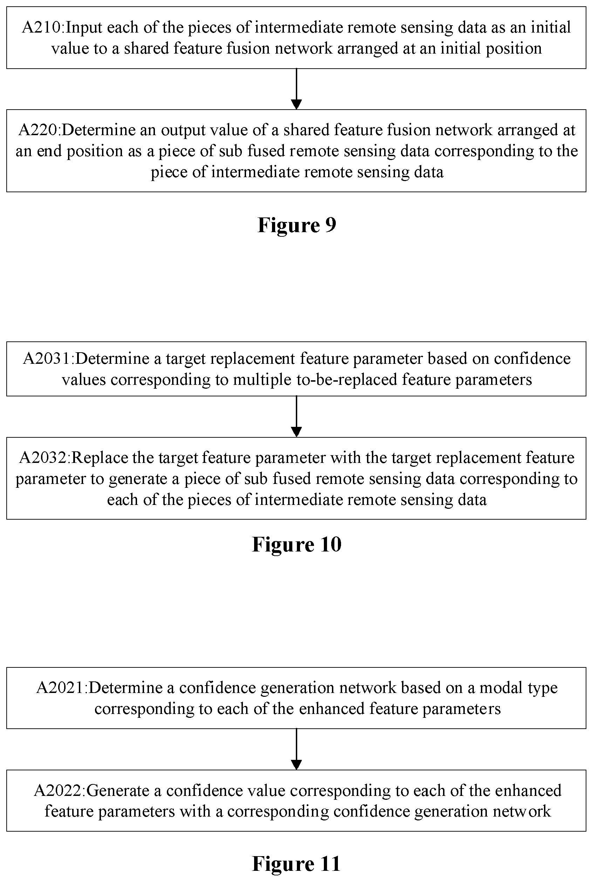

In an embodiment of the present disclosure, as shown in Figure 9, multiple shared feature fusion networks are configured, and the multiple shared feature fusion networks are connected in series.

The step A200 in which, for each of the pieces of intermediate remote sensing data, the piece of intermediate remote sensing data is inputted to a shared feature fusion network to obtain a confidence value corresponding to the piece of initial remote sensing data includes the following steps A210 and A220.

In A210, each of the pieces of intermediate remote sensing data is inputted as an initial value to a shared feature fusion network arranged at an initial position.

In A220, an output value of a shared feature fusion network arranged at an end position is determined as a piece of sub fused remote sensing data corresponding to the piece of intermediate remote sensing data.

In the embodiment, due to that the multiple shared feature fusion networks are connected in series, an output of a previous shared feature fusion network is used as an input of a current shared feature fusion network. Each of the shared feature fusion networks performs fusing and replacement on the inputted multimodal remote sensing data for optimization. The multimodal data after replacement by the previous shared feature fusion network is inputted to the current shared feature fusion network. Since remote sensing data of a modal type after replacement still includes enhanced feature parameters projected from data of other modal types, the generated enhanced feature parameters include context information in the data of the modal type and integrate information of remote sensing data of other modal types.

Accordingly, in the current shared feature fusion network, corresponding enhanced feature parameters are fused based on the contextual semantic relationship between the replaced enhanced feature parameters, and then replacement is performed based on the confidence value.

In the embodiment, each of the shared feature fusion networks may promote interaction between data of different modal types after multimodal enhanced feature parameters are fused. In addition, the multiple shared feature fusion networks may perform replacement and interaction on the multimodal enhanced feature parameters multiple times to further explore semantic dependencies between modalities and enhance feature representation.

Taking L shared feature fusion networks as an example, it is assumed that an input enhancement feature parameter of an m-th modal type in an l-th shared feature fusion network is $e_m^l$ where l∈L, $e_m^l$ is processed in the l-th shared feature fusion network as follows:

$$\hat{e}_m^l = \mathrm{MSA}\left(\mathrm{LN}\left(e_m^l\right)\right), e_m^{l+1} = \mathrm{MLP}\left(\mathrm{LN}\left(\hat{e}_m^l\right)\right)$$

where $\hat{e}_m^l$ represents an intermediate value, $e_m^{l+1}$ represents an output of the l-th shared feature fusion network and also represents an input of a (l+1)th shared feature fusion network and LN represents a conventional layer regularization operator.

In an embodiment of the present disclosure, as shown in Figure 10, the step A203, in which for each of the pieces of intermediate remote sensing data, replacement processing is performed on the target feature parameter in the piece of intermediate remote sensing data based on the confidence value of the piece of intermediate remote sensing data to generate a piece of sub fused remote sensing data corresponding to the piece of initial remote sensing data, includes the following steps A2031 and A2032.

In A2031, a target replacement feature parameter is determined based on confidence values corresponding to multiple to-be-replaced feature parameters. The to-be-replaced feature parameters are enhanced feature parameters of other modal types that represent the same ground feature information as the target feature parameter.

In A2032, the target feature parameter is replaced with the target replacement feature parameter to generate a piece of sub fused remote sensing data corresponding to each of the pieces of intermediate remote sensing data.

Specifically, taking the replacement of enhanced feature parameters corresponding to two modal types as an example, the replacement may be performed based on the following equation:

$$e_m^l = e_m^l \odot \mathbb{I}_{s^l\left(e_m^l\right)\geq\theta} + \mathrm{Proj}_{m'}^{\mathrm{M}}\left(e_m^l\right) \odot \mathbb{I}_{s^l\left(e_m^l\right)<\theta}$$

where II represents a predicate subscript condition indicator, and is related to $s^l\left(e_m^l\right)$. In a case of $s^l\left(e_m^l\right)\geq\theta$, II=1; and in a case of $s^l\left(e_m^l\right)<\theta$, II=0. $\mathrm{Proj}_{m'}^{\mathrm{M}}$ represents a replacement function for replacing an enhanced feature parameter of an M-th modal type with an enhanced feature parameter of an m'-th modal type. θ represents the confidence threshold, and 0 = 10⁻² . ⊙ represents an element-level multiplication operation, and indicating multiplying each of the enhanced feature parameters by a corresponding II.

In the embodiment, the target replacement feature parameter is an enhanced feature parameter corresponding to a maximum confidence value, thereby ensuring that the enhanced feature parameter after each replacement converges towards an optimized and accurate direction to improve the accuracy of data.

In an embodiment of the present disclosure, as shown in Figure 11, the shared feature fusion network includes multiple confidence generation networks each of which corresponds to a modal type.

The step A202 in which a confidence value is generated for each of the feature parameters includes the following steps A2021 and A2022.

In A2021, a confidence generation network is determined based on a modal type corresponding to each of the enhanced feature parameters.

In A2022, a confidence value corresponding to each of the enhanced feature parameters is generated with a corresponding confidence generation network.

In the embodiment, in order to enable the confidence generation network to participate in the backpropagation of the shared feature fusion network, the confidence generation network is configured to include an MLP and then be added to the shared feature fusion network. Therefore, the confidence generation network may be trained through backpropagation, thereby achieving accurate confidence value generated by the confidence generation network.

In an embodiment, the confidence generation network may be added to the shared feature fusion network by replacing $\hat{e}_m^l = \mathrm{MSA}\left(\mathrm{LN}\left(e_m^l\right)\right)$ with $\hat{e}_m^l = \mathrm{MSA}\left(\mathrm{LN}\left(e_m^l\right) \cdot s^l\left(e_m^l\right)\right)$, where $s^1()$ represents a confidence generation network and $s^1()=\mathrm{MLP}()$.

The MLPs in the present disclosure only indicate that the neural networks may be MLPs. The MLPs may have different parameters, and are different conventional neural networks that meet different usage requirements.

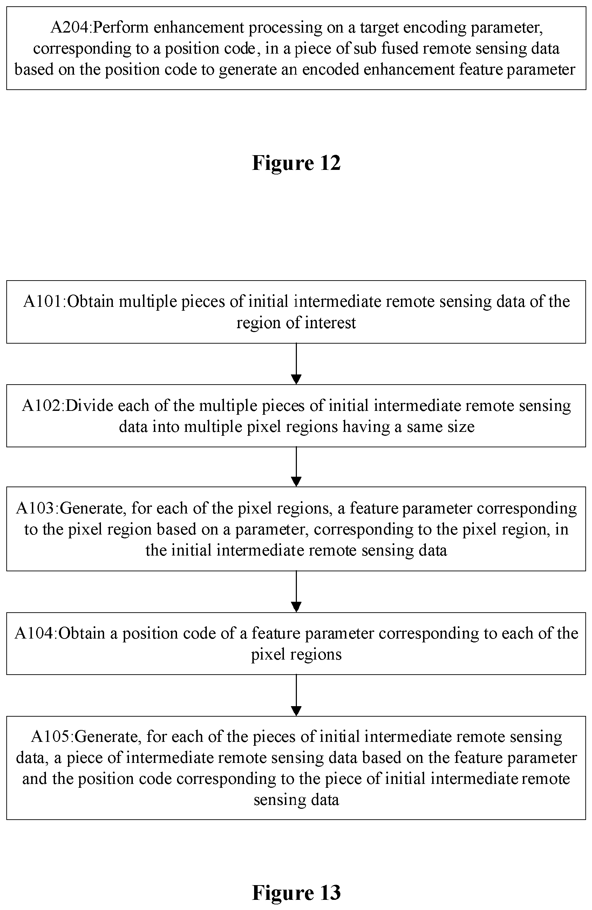

In an embodiment of the present disclosure, as shown in Figure 12, each of feature parameters included in a piece of intermediate remote sensing data corresponds to a position code.

After the step A203 in which for each of the pieces of intermediate remote sensing data, replacement processing is performed on a target feature parameter in the piece of intermediate remote sensing data based on the confidence value of the piece of intermediate remote sensing data to generate a piece of sub fused remote sensing data corresponding to the piece of intermediate remote sensing data, the shared feature fusion network is further configured to perform the following steps A204.

In A204, enhancement processing is performed on a target encoding parameter, corresponding to a position code, in a piece of sub fused remote sensing data based on the position code to generate an encoded enhancement feature parameter. The target encoding parameter is a feature parameter, corresponding to a position code, in the piece of sub fused remote sensing data. The enhancement processing is performed to enhance a position encoding parameter in the target encoding parameter.

Specifically, the enhancement processing is performed by adding the position code with a position encoding parameter in the corresponding feature parameter. In a calculation process of each of the shared feature fusion networks, the original position encoding parameter may be changed. Thus, it is difficult to align data of different modal types based on position code without the enhancement processing. Therefore, after a calculation process of each of the shared feature fusion networks, enhancement processing is performed on the position encoding parameter in the enhanced feature parameter, ensuring that the enhanced feature parameters in subsequent processes can be well aligned spatially based on the position code.

In an embodiment of the present disclosure, as shown in Figure 13, the step A100 in which multiple pieces of intermediate remote sensing data of the region of interest are obtained includes the following steps A101 to A105.

In A101, multiple pieces of initial intermediate remote sensing data of the region of interest are obtained. The multiple pieces of initial intermediate remote sensing data have different modal types. The multiple pieces of initial intermediate remote sensing data a have a same spatial dimension and a same channel dimension.

In A102, each of the multiple pieces of initial intermediate remote sensing data is divided into multiple pixel regions having a same size.

Each of the pixel regions is an image region of the entire remote sensing image.

Specifically, the pixel regions may be divided based on a same division rule.

In A103, for each of the pixel regions, a feature parameter corresponding to the pixel region is generated based on a parameter, corresponding to the pixel region, in the initial intermediate remote sensing data.

The parameters corresponding to the initial intermediate remote sensing data are the initial feature parameters, each of which may correspond to a pixel.

The feature parameter corresponding to each of the pixel regions is an intermediate feature parameter, which may be a one-dimension sub vector corresponding to the pixel region.

Specifically, in order to reduce data processing, each of the feature parameters is transformed to a one-dimension sub vector, so that each of the pieces of initial intermediate remote sensing data is a one-dimension vector including the same number of one-dimension sub vectors. Each of one-dimension sub vectors corresponds to a position code, and there is a corresponding relationship between position codes of one-dimension sub vectors at the same position. For example, one-dimension sub vectors at the same position correspond to same position codes.

In A104, a position code of a feature parameter corresponding to each of the pixel regions is obtained. Same pixel regions of different initial intermediate remote sensing data correspond to a same position code.

In A105, for each of the pieces of initial intermediate remote sensing data, a piece of intermediate remote sensing data is generated based on the feature parameter and the position code corresponding to the piece of initial intermediate remote sensing data.

In the embodiment, each of the pieces of initial intermediate remote sensing data is converted to a one-dimension vector, thereby reducing subsequent computation workload to improve the computation efficiency.

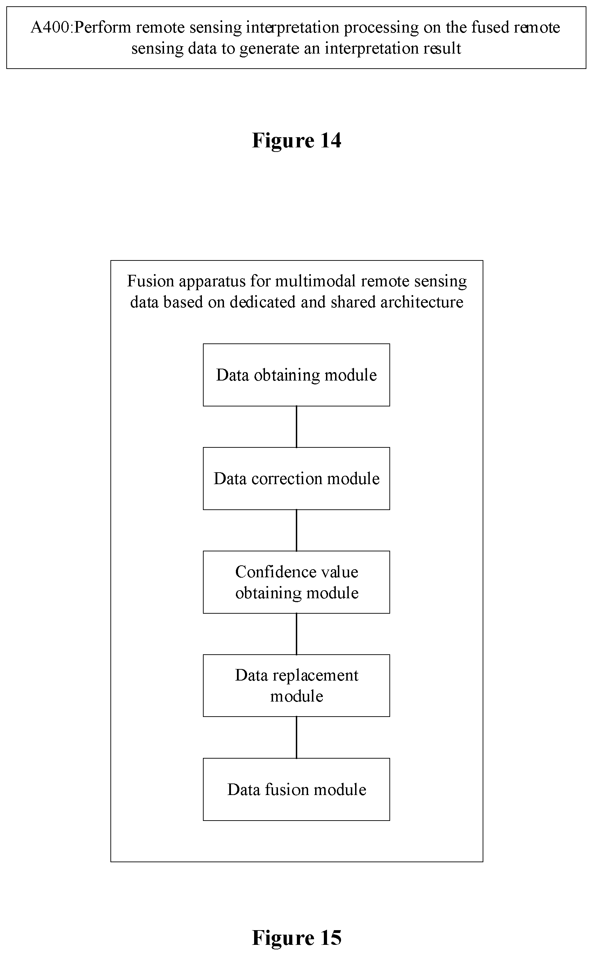

In an embodiment of the present disclosure, as shown in Figure 14, after the step A300 in which the fused remote sensing data of the region of interest is generated, the method further includes the following step A400.

In A400, remote sensing interpretation processing is performed on the fused remote sensing data to generate an interpretation result.

In the embodiment, the fused remote sensing data in the present disclosure is processed with different remote sensing interpretation task headers, an accurate interpretation result is generated. Since more modal information is fused in the fused remote sensing data and the representation accuracy of each piece of modal information is improved, the fused remote sensing data may be applied to more remote sensing interpretation tasks, and more accurate interpretation results can be obtained.

According to a third aspect of the present disclosure, as shown in Figure 15, a fusion apparatus for multimodal remote sensing data based on dedicated and shared architecture is provided. The apparatus includes: a data obtaining module, a data correction module, a confidence value obtaining module, a data replacement module, and a data fusion module.

The data obtaining module is configured to obtain multiple pieces of initial remote sensing data of a region of interest. The multiple pieces of initial remote sensing data have different modal types.

The data correction module is configured to perform, for each of the multiple pieces of initial remote sensing data, data correction processing on the initial remote sensing data using a dedicated network based on a modal type corresponding to the initial remote sensing data to generate a piece of intermediate remote sensing data corresponding to the initial remote sensing data. All pieces of intermediate remote sensing data corresponding to the plurality pieces of initial remote sensing data have a same spatial dimension and a same channel dimension.

The confidence value obtaining module is configured to obtain, for each of the pieces of intermediate remote sensing data, a confidence value corresponding to the piece of intermediate remote sensing data using a shared feature association network. Each of the pieces of intermediate remote sensing data includes multiple feature parameters, each of the feature parameters corresponds to a confidence value, and a confidence value of a piece of intermediate remote sensing data is determined based on representation strengths of feature parameters of the piece of intermediate remote sensing data to corresponding ground feature information in the region of interest.

The data replacement module is configured to perform, for each of the pieces of intermediate remote sensing data, replacement processing on a target feature parameter in the piece of intermediate remote sensing data based on the confidence value of the piece of intermediate remote sensing data to generate a piece of sub fused remote sensing data corresponding to the piece of initial remote sensing data. The target feature parameter corresponds to a confidence value less than a confidence threshold, and a confidence value corresponding to a feature parameter in the sub fused remote sensing data is greater than or equal to the confidence threshold.

The data fusion module is configured to generate fused remote sensing data of the region of interest based on all pieces of sub fused remote sensing data and modal weights. The modal weights are determined based on fusion ratios of sub fused remote sensing data having different modal types.

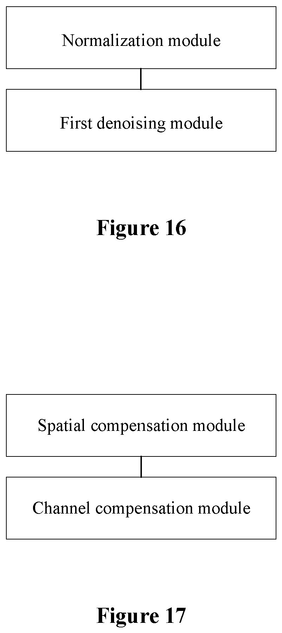

In an embodiment of the present disclosure, as shown in Figure 16, the data correction module includes a normalization module and a first denoising module.

The normalization module is configured to perform data normalization processing on the initial remote sensing data to generate first initial data. Each of parameters in the first initial data is within a preset range.

The first denoising module is configured to perform data denoising processing on the first initial data to generate second initial data. The data denoising processing is performed to reduce a parameter based on a value of the parameter. The value of the parameter is positively correlated with a reduction degree. Both the data normalization processing and the data denoising processing are determined based on a modal type corresponding to the initial remote sensing data.

In an embodiment of the present disclosure, as shown in Figure 17, the data correction module further includes a data compensation module.

The data compensation module is configured to perform data compensation processing on the second initial data using the initial remote sensing data to generate the intermediate remote sensing data. The data compensation processing is performed to compensate ground feature information in the initial remote sensing data to the second initial data.

The data compensation module includes: a spatial compensation module and a channel compensation module.

The spatial compensation module is configured to perform spatial dimension compensation processing on the second initial data using the initial remote sensing data to generate first compensation data.

The channel compensation module is configured to perform channel dimension compensation processing on the first compensation data to generate the intermediate remote sensing data.

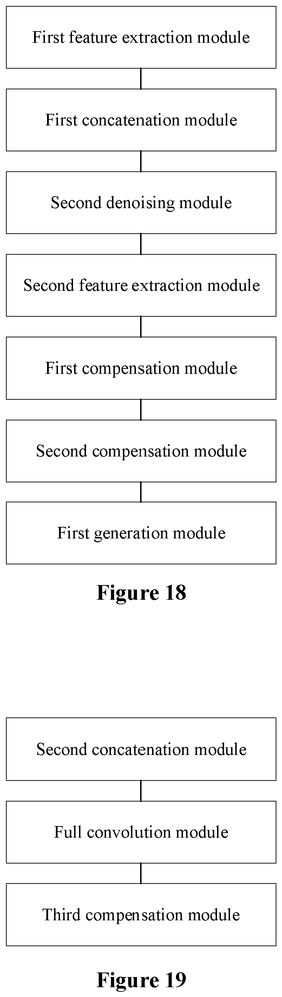

In an embodiment of the present disclosure, as shown in Figure 18, the spatial compensation module includes: a first feature extraction module, a first concatenation module, a second denoising module, a second feature extraction module, a first compensation module, a second compensation module, and a first generation module.

The first feature extraction module is configured to perform first feature extraction processing on the initial remote sensing data to generate third initial data. The first feature extraction processing is performed to extract the ground feature information in the region of interest included in the initial remote sensing data.

The first concatenation module is configured to concatenate the second initial data and the third initial data to generate first concatenated remote sensing data.

The second denoising module is configured to perform compensation and denoising processing on the first concatenated remote sensing data to generate a first spatial fusion feature.

The second feature extraction module is configured to perform second feature extraction processing on the first concatenated remote sensing data to generate a second spatial fusion feature. The second feature extraction processing is performed to extract ground feature information in the region of interest included in the first concatenated remote sensing data.

The first compensation module is configured to perform spatial dimension data compensation on the second initial data based on the first spatial fusion feature to generate fourth initial data.

The second compensation module is configured to perform spatial dimension data compensation on the third initial data based on the second spatial fusion feature to generate fifth initial data.

The first generation module is configured to generate the first compensation data based on the fourth initial data and the fifth initial data.

In an embodiment of the present disclosure, as shown in Figure 19, the channel compensation module includes: a second concatenation module, a full convolution module, and a third compensation module.

The second concatenation module is configured to concatenate the fourth initial data and the fifth initial data to obtain second concatenated remote sensing data.

The full convolution module is configured to perform a full convolution operation on the second concatenated remote sensing data to generate sixth initial data.

The third compensation module is configured to perform channel dimension data compensation on the sixth initial data based on the second concatenated remote sensing data to generate the intermediate remote sensing data.

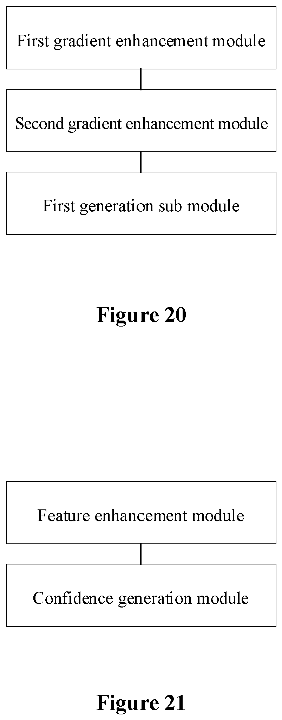

In an embodiment of the present disclosure, as shown in Figure 20, the first generation module includes: a first gradient enhancement module, a second gradient enhancement module, and a first generation sub module.

The first gradient enhancement module is configured to perform gradient enhancement processing on the fourth initial data using the third initial data to generate first gradient remote sensing data.

The second gradient enhancement module is configured to perform gradient enhancement processing on the fifth initial data using the second initial data to generate second gradient remote sensing data.

The first generation sub module is configured to generate the first compensation data based on the first gradient remote sensing data and the second gradient remote sensing data.

In an embodiment of the present disclosure, as shown in Figure 21, the shared feature association network includes a shared feature fusion network.

The confidence value obtaining module includes: a feature enhancement module and a confidence generation module.

The feature enhancement module is configured to, for each of the pieces of intermediate remote sensing data, generate, by the shared feature fusion network, an enhanced feature parameter corresponding to the piece of intermediate remote sensing data based on a semantic relationship between the feature parameters included in the piece of intermediate remote sensing data.

The confidence generation module is configured to generate the confidence value corresponding to the piece of intermediate remote sensing data based on the enhanced feature parameter.

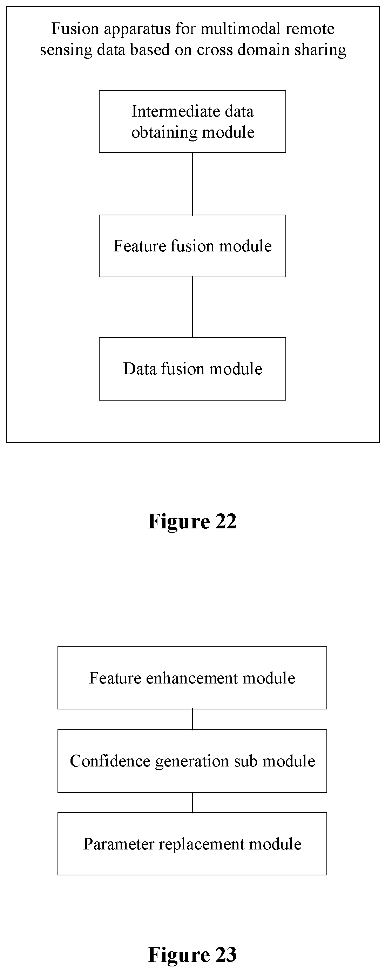

According to a fourth aspect of the present disclosure, as shown in Figure 22, a multimodal remote sensing data fusion apparatus based on cross domain sharing is provided. The apparatus includes: an intermediate data obtaining module, a feature fusion module, and a data fusion module.

The intermediate data obtaining module is configured to obtain multiple pieces of intermediate remote sensing data of a region of interest are obtained. The multiple pieces of intermediate remote sensing data have different modal types. All pieces of intermediate remote sensing data corresponding have a same spatial dimension and a same channel dimension.

The feature fusion module is configured to, for each of the pieces of intermediate remote sensing data, input the piece of intermediate remote sensing data to a shared feature fusion network to generate a piece of sub fused remote sensing data corresponding to the piece of initial remote sensing data. A confidence value corresponding to a feature parameter in the sub fused remote sensing data is greater than or equal to a confidence threshold.

The data fusion module is configured to generate fused remote sensing data of the region of interest based on all pieces of sub fused remote sensing data and modal weights. The modal weights are determined based on fusion ratios of sub fused remote sensing data having different modal types.

As shown in Figure 23, the feature fusion module includes: a feature enhancement module, a confidence generation sub module, and a parameter replacement module.

The feature enhancement module is configured to, for each of the pieces of intermediate remote sensing data, an enhanced feature parameter corresponding to the piece of intermediate remote sensing data is generated based on a semantic relationship between the feature parameters included in the piece of intermediate remote sensing data.

The confidence generation sub module is configured to generate a confidence value for each of the feature parameters. A confidence value of a piece of intermediate remote sensing data is determined based on representation strengths of enhanced feature parameters of the piece of intermediate remote sensing data to corresponding ground feature information in the region of interest.

The parameter replacement module is configured to, for each of the pieces of intermediate remote sensing data, perform replacement processing on a target feature parameter in the piece of intermediate remote sensing data based on the confidence value of the piece of intermediate remote sensing data to generate a piece of sub fused remote sensing data corresponding to the piece of intermediate remote sensing data. The target feature parameter corresponds to an enhanced confidence value less than a confidence threshold.

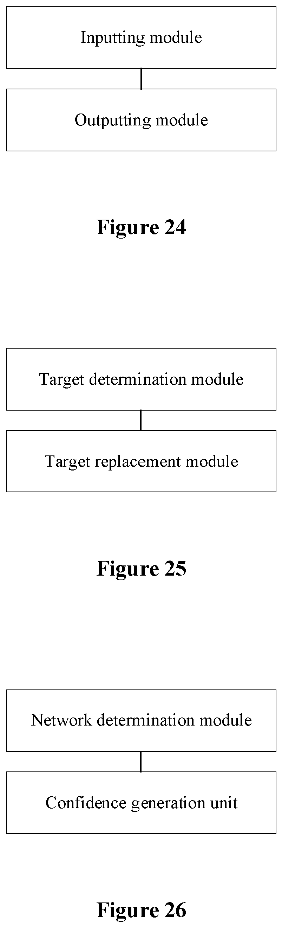

In an embodiment of the present disclosure, as shown in Figure 24, multiple shared feature fusion networks are configured, and the multiple shared feature fusion networks are connected in series.

The feature fusion module includes an inputting module and an outputting module.

The inputting module is configured to input each of the pieces of intermediate remote sensing data as an initial value to a shared feature fusion network arranged at an initial position.

The outputting module is configured to determine an output value of a shared feature fusion network arranged at an end position as a piece of sub fused remote sensing data corresponding to the piece of intermediate remote sensing data.

In an embodiment of the present disclosure, as shown in Figure 25, the parameter replacement module includes a target determination module and a target replacement module.

The target determination module is configured to determine a target replacement feature parameter based on confidence values corresponding to multiple to-be-replaced feature parameters. The to-be-replaced feature parameters are enhanced feature parameters of other modal types that represent the same ground feature information as the target feature parameter.

The target replacement module is configured to replace the target feature parameter with the target replacement feature parameter to generate a piece of sub fused remote sensing data corresponding to each of the pieces of intermediate remote sensing data.

In an embodiment of the present disclosure, as shown in Figure 26, the shared feature fusion network includes multiple confidence generation networks each of which corresponds to a modal type.

The confidence generation sub module includes a network determination module and a confidence generation unit.

The network determination module is configured to determine a confidence generation network based on a modal type corresponding to each of the enhanced feature parameters.

The confidence generation unit is configured to generate a confidence value corresponding to each of the enhanced feature parameters with a corresponding confidence generation network.

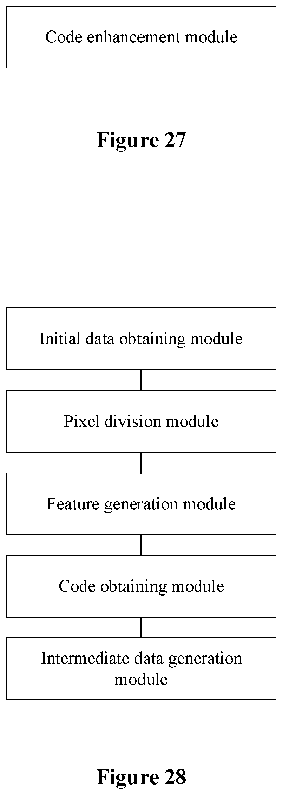

In an embodiment of the present disclosure, as shown in Figure 27, each of feature parameters included in a piece of intermediate remote sensing data corresponds to a position code.

The feature fusion module further includes a code enhancement module.

The code enhancement module is configured to, after for each of the pieces of intermediate remote sensing data, replacement processing is performed on a target feature parameter in the piece of intermediate remote sensing data based on the confidence value of the piece of intermediate remote sensing data to generate a piece of sub fused remote sensing data corresponding to the piece of intermediate remote sensing data, perform enhancement processing on a target encoding parameter, corresponding to a position code, in a piece of sub fused remote sensing data based on the position code to generate an encoded enhancement feature parameter. The target encoding parameter is a feature parameter, corresponding to a position code, in the piece of sub fused remote sensing data. The enhancement processing is performed to enhance a position encoding parameter in the target encoding parameter.

In an embodiment of the present disclosure, as shown in Figure 28, the intermediate data obtaining module includes: an initial data obtaining module, a pixel division module, a feature generation module, a code obtaining module, and an intermediate data generation module.

The initial data obtaining module is configured to obtain multiple pieces of initial intermediate remote sensing data of the region of interest. The multiple pieces of initial intermediate remote sensing data have different modal types. The multiple pieces of initial intermediate remote sensing data a have a same spatial dimension and a same channel dimension.

The pixel division module is configured to divide each of the multiple pieces of initial intermediate remote sensing data into multiple pixel regions having a same size.

The feature generation module is configured to, for each of the pixel regions, generate a feature parameter corresponding to the pixel region based on a parameter, corresponding to the pixel region, in the initial intermediate remote sensing data.

The code obtaining module is configured to obtain a position code of a feature parameter corresponding to each of the pixel regions. Same pixel regions of different initial intermediate remote sensing data correspond to a same position code.

The intermediate data generation module is configured to, for each of the pieces of initial intermediate remote sensing data, generate a piece of intermediate remote sensing data based on the feature parameter and the position code corresponding to the piece of initial intermediate remote sensing data.

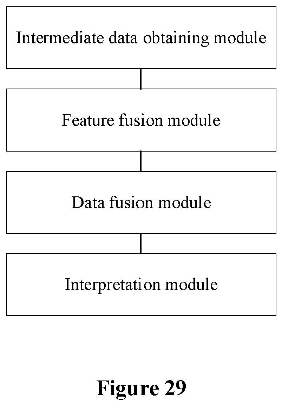

In an embodiment of the present disclosure, as shown in Figure 29, the apparatus further includes an interpretation module.

The interpretation module is configured to, after the fused remote sensing data of the region of interest is generated, perform remote sensing interpretation processing on the fused remote sensing data to generate an interpretation result.

According to the present disclosure, a non-transient computer-readable storage medium is further provided. The non-transient computer-readable storage medium stores a computer program. The computer program, when executed by a processor, causes the processor to perform the methods described above.

According to the present disclosure, an electronic device is further provided. The electronic device includes: a memory, a processor, and a computer program stored in the memory and capable of being executed by the processor. The processor is configured to, when executing the computer program, perform the methods described above.

According to an embodiment of the present disclosure, a non-instantaneous computer-readable storage medium is further provided. The storage medium may be arranged in an electronic device and stores at least one instruction or at least one program related to an implementation of a device in a device embodiment. The at least one instruction or at least one program is loaded and executed by a processor to implement the device in the above embodiment.

According to an embodiment of the present disclosure, an electronic device is further provided. The electronic device includes a processor and the non-instantaneous computer-readable storage medium.

According to an embodiment of the present disclosure, a computer program product is further provided. The computer program product includes program codes. The program product, when executed by an electronic device, causes the electronic device to perform the steps described above in the embodiments of the present disclosure.

Although the embodiments of the present disclosure have been described in detail with examples, those skilled in the art should understand that the above examples are only for illustration and not to limit the scope of the present disclosure. Those skilled in the art should understand that various modifications may be made to the embodiments without departing from the scope of the present disclosure. The scope of the present disclosure should be based on the protection scope of the claims.

**Claims**

1. A fusion method for multimodal remote sensing data based on dedicated and shared architecture, comprising:

   obtaining a plurality pieces of initial remote sensing data of a region of interest, wherein the plurality pieces of initial remote sensing data have different modal types;
   performing, for each of the plurality pieces of initial remote sensing data, data correction processing on the initial remote sensing data using a convolutional neural network corresponding to the initial remote sensing data based on a modal type corresponding to the initial remote sensing data to generate a piece of intermediate remote sensing data corresponding to the initial remote sensing data, wherein all pieces of intermediate remote sensing data corresponding to the plurality pieces of initial remote sensing data have a same spatial dimension and a same channel dimension;
   obtaining, for each of the pieces of intermediate remote sensing data, a confidence value corresponding to the piece of intermediate remote sensing data using a shared feature association network, wherein each of the pieces of intermediate remote sensing data comprises a plurality of feature parameters, each of the feature parameters corresponds to a confidence value, and a confidence value of a piece of intermediate remote sensing data is determined based on representation strengths of feature parameters of the piece of intermediate remote sensing data to corresponding ground feature information in the region of interest;

performing, for each of the pieces of intermediate remote sensing data, replacement processing on a target feature parameter in the piece of intermediate remote sensing data based on the confidence value of the piece of intermediate remote sensing data to generate a piece of replaced remote sensing data corresponding to the piece of initial remote sensing data, wherein the target feature parameter corresponds to a confidence value less than a confidence threshold, and a confidence value corresponding to a feature parameter in the replaced remote sensing data is greater than or equal to the confidence threshold; and

generating fused remote sensing data of the region of interest based on all pieces of replaced remote sensing data and modal weights, wherein the modal weights are determined based on fusion ratios of replaced remote sensing data having different modal types;

wherein the data correction processing comprises:

> performing data normalization processing on the initial remote sensing data to generate first initial data, wherein each of parameters in the first initial data is within a preset range; and
>
> performing data denoising processing on the first initial data to generate second initial data, wherein the data denoising processing is performed to reduce a parameter based on a value of the parameter, the value of the parameter is positively correlated with a reduction degree, and both the data normalization processing and the data denoising processing are determined based on a modal type corresponding to the initial remote sensing data.

2. The fusion method for multimodal remote sensing data based on dedicated and shared architecture according to claim 1, wherein the data correction processing further comprises:

> performing data compensation processing on the second initial data using the initial remote sensing data to generate the intermediate remote sensing data, wherein the data compensation processing is performed to compensate ground feature information in the initial remote sensing data to the second initial data; and
>
> the data compensation processing comprises:
>
> > performing spatial dimension compensation processing on the second initial data using the initial remote sensing data to generate first compensation data; and
> > performing channel dimension compensation processing on the first compensation data to generate the intermediate remote sensing data.

3. The fusion method for multimodal remote sensing data based on dedicated and shared architecture according to claim 2, wherein the performing spatial dimension compensation processing on the second initial data using the initial remote sensing data to generate first compensation data comprises:

> performing first feature extraction processing on the initial remote sensing data to generate third initial data, wherein the first feature extraction processing is performed to extract the ground feature information in the region of interest comprised in the initial remote sensing data;
> concatenating the second initial data and the third initial data to generate first concatenated remote sensing data;
> performing compensation and denoising processing on the first concatenated remote sensing data to generate a first spatial fusion feature;
> performing second feature extraction processing on the first concatenated remote sensing data to generate a second spatial fusion feature, wherein the second feature extraction processing is performed to extract ground feature information in the region of interest comprised in the first concatenated remote sensing data;
> performing spatial dimension data compensation on the second initial data based on the first spatial fusion feature to generate fourth initial data;
> performing spatial dimension data compensation on the third initial data based on the second spatial fusion feature to generate fifth initial data; and
> generating the first compensation data based on the fourth initial data and the fifth initial data.

4. The fusion method for multimodal remote sensing data based on dedicated and shared architecture according to claim 3, wherein the performing channel dimension compensation processing on the first compensation data to generate the intermediate remote sensing data comprises:

> concatenating the fourth initial data and the fifth initial data to obtain second concatenated remote sensing data;
> performing a full convolution operation on the second concatenated remote sensing data to generate sixth initial data; and

performing channel dimension data compensation on the sixth initial data based on the second concatenated remote sensing data to generate the intermediate remote sensing data.

5. The fusion method for multimodal remote sensing data based on dedicated and shared architecture according to claim 3, wherein the generating the first compensation data based on the fourth initial data and the fifth initial data comprises:

performing gradient processing on the fourth initial data using the third initial data to generate first gradient remote sensing data;

performing gradient processing on the fifth initial data using the second initial data to generate second gradient remote sensing data; and

generating the first compensation data based on the first gradient remote sensing data and the second gradient remote sensing data.

6. The fusion method for multimodal remote sensing data based on dedicated and shared architecture according to any of the preceding claims, wherein

the shared feature association network comprises a shared feature fusion network; and

the obtaining, for each of the pieces of intermediate remote sensing data, a confidence value corresponding to the piece of intermediate remote sensing data using a shared feature association network comprises:

for each of the pieces of intermediate remote sensing data,

generating, by the shared feature fusion network, a feature parameter corresponding to the piece of intermediate remote sensing data based on a semantic relationship between the feature parameters comprised in the piece of intermediate remote sensing data; and

generate the confidence value corresponding to the piece of intermediate remote sensing data based on the feature parameter.

7. A fusion apparatus for multimodal remote sensing data based on dedicated and shared architecture, comprising:

a data obtaining module, configured to obtain a plurality pieces of initial remote sensing data of a region of interest, wherein the plurality pieces of initial remote sensing data have different modal types;

a data correction module, configured to perform, for each of the plurality pieces of initial remote sensing data, data correction processing on the initial remote sensing data using a convolutional neural network corresponding to the initial remote sensing data based on a modal type corresponding to the initial remote sensing data to generate a piece of intermediate remote sensing data corresponding to the initial remote sensing data, wherein all pieces of intermediate remote sensing data corresponding to the plurality pieces of initial remote sensing data have a same spatial dimension and a same channel dimension;

a confidence value obtaining module, configured to obtain, for each of the pieces of intermediate remote sensing data, a confidence value corresponding to the piece of intermediate remote sensing data using a shared feature association network, wherein each of the pieces of intermediate remote sensing data comprises a plurality of feature parameters, each of the feature parameters corresponds to a confidence value, and a confidence value of a piece of intermediate remote sensing data is determined based on representation strengths of feature parameters of the piece of intermediate remote sensing data to corresponding ground feature information in the region of interest;

a data replacement module, configured to perform, for each of the pieces of intermediate remote sensing data, replacement processing on a target feature parameter in the piece of intermediate remote sensing data based on the confidence value of the piece of intermediate remote sensing data to generate a piece of replaced remote sensing data corresponding to the piece of initial remote sensing data, wherein the target feature parameter corresponds to a confidence value less than a confidence threshold, and a confidence value corresponding to a feature parameter in the replaced remote sensing data is greater than or equal to the confidence threshold; and

a data fusion module, configured to generate fused remote sensing data of the region of interest based on all pieces of replaced remote sensing data and modal weights, wherein the modal weights are determined based on fusion ratios of replaced remote sensing data having different modal types;

wherein the data correction module comprises:

a normalization module, configured to perform data normalization processing on the initial remote sensing data to generate first initial data, wherein each of parameters in the first initial data is within a preset range; and

a first denoising module, configured to perform data denoising processing on the first initial data to generate second initial data, wherein the data denoising processing is performed to reduce a parameter based on a value of the parameter, the value of the parameter is positively correlated with a reduction degree, and both the data normalization processing and the data denoising processing are determined based on a modal type corresponding to the initial remote sensing data.

8. The fusion apparatus for multimodal remote sensing data based on dedicated and shared architecture according to claim 7, wherein the data correction module further comprises:

a data compensation module, configured to perform data compensation processing on the second initial data using the initial remote sensing data to generate the intermediate remote sensing data, wherein the data compensation processing is performed to compensate ground feature information in the initial remote sensing data to the second initial data; and
the data compensation module comprises:

a spatial compensation module, configured to perform spatial dimension compensation processing on the second initial data using the initial remote sensing data to generate first compensation data; and
a channel compensation module, configured to perform channel dimension compensation processing on the first compensation data to generate the intermediate remote sensing data.

9. The fusion apparatus for multimodal remote sensing data based on dedicated and shared architecture according to claim 8, wherein the spatial compensation module comprises:

a first feature extraction module, configured to perform first feature extraction processing on the initial remote sensing data to generate third initial data, wherein the first feature extraction processing is performed to extract the ground feature information in the region of interest comprised in the initial remote sensing data;
a first concatenation module, configured to concatenate the second initial data and the third initial data to generate first concatenated remote sensing data;
a second denoising module, configured to perform compensation and denoising processing on the first concatenated remote sensing data to generate a first spatial fusion feature;
a second feature extraction module, configured to perform second feature extraction processing on the first concatenated remote sensing data to generate a second spatial fusion feature, wherein the second feature extraction processing is performed to extract ground feature information in the region of interest comprised in the first concatenated remote sensing data;
a first compensation module, configured to perform spatial dimension data compensation on the second initial data based on the first spatial fusion feature to generate fourth initial data;
a second compensation module, configured to perform spatial dimension data compensation on the third initial data based on the second spatial fusion feature to generate fifth initial data; and
a first generation module, configured to generate the first compensation data based on the fourth initial data and the fifth initial data.

10. The fusion apparatus for multimodal remote sensing data based on dedicated and shared architecture according to claim 9, wherein the channel compensation module comprises:

a second concatenation module, configured to concatenate the fourth initial data and the fifth initial data to obtain second concatenated remote sensing data;
a full convolution module, configured to perform a full convolution operation on the second concatenated remote sensing data to generate sixth initial data; and
a third compensation module, configured to perform channel dimension data compensation on the sixth initial data based on the second concatenated remote sensing data to generate the intermediate remote sensing data.

11. The fusion apparatus for multimodal remote sensing data based on dedicated and shared architecture according to claim 9 or 10, wherein the first generation module comprises:

a first gradient enhancement module, configured to perform gradient enhancement processing on the fourth initial data using the third initial data to generate first gradient remote sensing data;

a second gradient enhancement module, configured to perform gradient enhancement processing on the fifth initial data using the second initial data to generate second gradient remote sensing data; and
a first generation sub module, configured to generate the first compensation data based on the first gradient remote sensing data and the second gradient remote sensing data.

12. The fusion apparatus for multimodal remote sensing data based on dedicated and shared architecture according to any of claims 7 to 11, wherein

the shared feature association network comprises a shared feature fusion network; and
the confidence value obtaining module comprises:

a feature enhancement module, configured to, for each of the pieces of intermediate remote sensing data, generate, by the shared feature fusion network, a feature parameter corresponding to the piece of intermediate remote sensing data based on a semantic relationship between the feature parameters comprised in the piece of intermediate remote sensing data; and
a confidence generation module, configured to generate the confidence value corresponding to the piece of intermediate remote sensing data based on the feature parameter.

13. An electronic device, comprising:

a memory;
a processor; and
a computer program, stored in the memory and capable of being executed by the processor; wherein
the processor is configured to, when executing the computer program, perform the fusion method for multimodal remote sensing data based on dedicated and shared architecture according to any one of claims 1 to 6.

**Patentansprüche**

1. Fusionsverfahren für multimodale Fernerkundungsdaten basierend auf dedizierter und gemeinsam genutzter Architektur, umfassend:

Erhalten einer Vielzahl von Stücken initialer Fernerkundungsdaten einer Region von Interesse, wobei die Vielzahl von Stücken initialer Fernerkundungsdaten unterschiedliche Modalitätstypen aufweisen;
Durchführen für jedes der Vielzahl von Stücken initialer Fernerkundungsdaten einer Datenkorrekturverarbeitung an den initialen Fernerkundungsdaten unter Verwendung eines konvolutionalen neuronalen Netzes, das den initialen Fernerkundungsdaten entspricht, basierend auf einem Modalitätstyp, der den initialen Fernerkundungsdaten entspricht, um ein Stück intermediärer Fernerkundungsdaten zu erzeugen, das den initialen Fernerkundungsdaten entspricht, wobei alle Stücke intermediärer Fernerkundungsdaten, die der Vielzahl von Stücken initialer Fernerkundungsdaten entsprechen, eine gleiche räumliche Dimension und eine gleiche Kanaldimension aufweisen;
Erhalten für jedes der Stücke intermediärer Fernerkundungsdaten eines Konfidenzwerts, der dem Stück intermediärer Fernerkundungsdaten entspricht, unter Verwendung eines gemeinsam genutzten Merkmalsassoziationsnetzes, wobei jedes der Stücke intermediärer Fernerkundungsdaten eine Vielzahl von Merkmalsparametern umfasst, wobei jeder der Merkmalsparameter einem Konfidenzwert entspricht, und wobei ein Konfidenzwert eines Stücks intermediärer Fernerkundungsdaten basierend auf Repräsentationsstärken von Merkmalsparametern des Stücks intermediärer Fernerkundungsdaten zu entsprechender Bodenmerkmalinformation in der Region von Interesse bestimmt wird;
Durchführen für jedes der Stücke intermediärer Fernerkundungsdaten einer Ersetzungsverarbeitung an einem Ziel-Merkmalsparameter in dem Stück intermediärer Fernerkundungsdaten basierend auf dem Konfidenzwert des Stücks intermediärer Fernerkundungsdaten, um ein Stück ersetzter Fernerkundungsdaten zu erzeugen, das dem Stück initialer Fernerkundungsdaten entspricht, wobei der Ziel-Merkmalsparameter einem Konfidenzwert kleiner als einem Konfidenzschwellenwert entspricht, und wobei ein Konfidenzwert, der einem Merkmalsparameter in den ersetzten Fernerkundungsdaten entspricht, größer als oder gleich dem Konfidenzschwellenwert ist; und
Erzeugen fusionierter Fernerkundungsdaten der Region von Interesse basierend auf allen Stücken ersetzter Fernerkundungsdaten und Modalitätsgewichten, wobei die Modalitätsgewichte basierend auf Fusionsverhältnissen ersetzter Fernerkundungsdaten, die unterschiedliche Modalitätstypen aufweisen, bestimmt werden;

wobei die Datenkorrekturverarbeitung Folgendes umfasst:

Durchführen einer Datennormalisierungsverarbeitung an den initialen Fernerkundungsdaten, um erste initiale Daten zu erzeugen, wobei jeder der Parameter in den ersten initialen Daten innerhalb eines vorgegebenen Bereichs liegt; und
Durchführen einer Datenentrauschungsverarbeitung an den ersten initialen Daten, um zweite initiale Daten zu erzeugen, wobei die Datenentrauschungsverarbeitung durchgeführt wird, um einen Parameter basierend auf einem Wert des Parameters zu reduzieren, wobei der Wert des Parameters positiv mit einem Reduktionsgrad korreliert, und wobei sowohl die Datennormalisierungsverarbeitung als auch die Datenentrauschungsverarbeitung basierend auf einem Modalitätstyp, der den initialen Fernerkundungsdaten entspricht, bestimmt werden.

2. Fusionsverfahren für multimodale Fernerkundungsdaten basierend auf dedizierter und gemeinsam genutzter Architektur nach Anspruch 1, wobei die Datenkorrekturverarbeitung weiter Folgendes umfasst:

Durchführen einer Datenkompensationsverarbeitung an den zweiten initialen Daten unter Verwendung der initialen Fernerkundungsdaten, um die intermediären Fernerkundungsdaten zu erzeugen, wobei die Datenkompensationsverarbeitung durchgeführt wird, um Bodenmerkmalinformation in den initialen Fernerkundungsdaten auf die zweiten initialen Daten zu kompensieren; und
die Datenkompensationsverarbeitung Folgendes umfasst:

Durchführen einer Kompensationsverarbeitung der räumlichen Dimension an den zweiten initialen Daten unter Verwendung der initialen Fernerkundungsdaten, um erste Kompensationsdaten zu erzeugen; und
Durchführen einer Kompensationsverarbeitung der Kanaldimension an den ersten Kompensationsdaten, um die intermediären Fernerkundungsdaten zu erzeugen.

3. Fusionsverfahren für multimodale Fernerkundungsdaten basierend auf dedizierter und gemeinsam genutzter Architektur nach Anspruch 2, wobei das Durchführen einer Kompensationsverarbeitung der räumlichen Dimension an den zweiten initialen Daten unter Verwendung der initialen Fernerkundungsdaten, um erste Kompensationsdaten zu erzeugen, Folgendes umfasst:

Durchführen einer ersten Merkmalsextraktionsverarbeitung an den initialen Fernerkundungsdaten, um dritte initiale Daten zu erzeugen, wobei die erste Merkmalsextraktionsverarbeitung durchgeführt wird, um die Bodenmerkmalinformation in der Region von Interesse, die in den initialen Fernerkundungsdaten umfasst ist, zu extrahieren;
Konkatenieren der zweiten initialen Daten und der dritten initialen Daten, um erste konkatenierte Fernerkundungsdaten zu erzeugen;
Durchführen einer Kompensations- und Entrauschungsverarbeitung an den ersten konkatenierten Fernerkundungsdaten, um ein erstes räumliches Fusionsmerkmal zu erzeugen;
Durchführen einer zweiten Merkmalsextraktionsverarbeitung an den ersten konkatenierten Fernerkundungsdaten, um ein zweites räumliches Fusionsmerkmal zu erzeugen, wobei die zweite Merkmalsextraktionsverarbeitung durchgeführt wird, um Bodenmerkmalinformation in der Region von Interesse, die in den ersten konkatenierten Fernerkundungsdaten umfasst ist, zu extrahieren;
Durchführen einer Datenkompensation der räumlichen Dimension an den zweiten initialen Daten basierend auf dem ersten räumlichen Fusionsmerkmal, um vierte initiale Daten zu erzeugen;
Durchführen einer Datenkompensation der räumlichen Dimension an den dritten initialen Daten basierend auf dem zweiten räumlichen Fusionsmerkmal, um fünfte initiale Daten zu erzeugen; und
Erzeugen der ersten Kompensationsdaten basierend auf den vierten initialen Daten und den fünften initialen Daten.

4. Fusionsverfahren für multimodale Fernerkundungsdaten basierend auf dedizierter und gemeinsam genutzter Architektur nach Anspruch 3, wobei das Durchführen einer Kompensationsverarbeitung der Kanaldimension an den ersten Kompensationsdaten, um die intermediären Fernerkundungsdaten zu erzeugen, Folgendes umfasst:

Konkatenieren der vierten initialen Daten und der fünften initialen Daten, um zweite konkatenierte Fernerkundungsdaten zu erhalten;
Durchführen einer vollständigen Konvolutionsoperation an den zweiten konkatenierten Fernerkundungsdaten, um sechste initiale Daten zu erzeugen; und

Durchführen einer Datenkompensation der Kanaldimension an den sechsten initialen Daten basierend auf den zweiten konkatenierten Fernerkundungsdaten, um die intermediären Fernerkundungsdaten zu erzeugen.

5. Fusionsverfahren für multimodale Fernerkundungsdaten basierend auf dedizierter und gemeinsam genutzter Architektur nach Anspruch 3, wobei das Erzeugen der ersten Kompensationsdaten basierend auf den vierten initialen Daten und den fünften initialen Daten Folgendes umfasst:

Durchführen einer Gradientenverarbeitung an den vierten initialen Daten unter Verwendung der dritten initialen Daten, um erste Gradienten-Fernerkundungsdaten zu erzeugen;
Durchführen einer Gradientenverarbeitung an den fünften initialen Daten unter Verwendung der zweiten initialen Daten, um zweite Gradienten-Fernerkundungsdaten zu erzeugen; und
Erzeugen der ersten Kompensationsdaten basierend auf den ersten Gradienten-Fernerkundungsdaten und den zweiten Gradienten-Fernerkundungsdaten.

6. Fusionsverfahren für multimodale Fernerkundungsdaten basierend auf dedizierter und gemeinsam genutzter Architektur nach einem der vorstehenden Ansprüche, wobei

das gemeinsam genutzte Merkmalsassoziationsnetz ein gemeinsam genutztes Merkmalsfusionsnetz umfasst; und
das Erhalten für jedes der Stücke intermediärer Fernerkundungsdaten eines Konfidenzwerts, der dem Stück intermediärer Fernerkundungsdaten entspricht, unter Verwendung eines gemeinsam genutzten Merkmalsassoziationsnetzes, Folgendes umfasst:

für jedes der Stücke intermediärer Fernerkundungsdaten,
Erzeugen durch das gemeinsam genutzte Merkmalsfusionsnetz eines Merkmalsparameters, der dem Stück intermediärer Fernerkundungsdaten entspricht, basierend auf einer semantischen Beziehung zwischen den in dem Stück intermediärer Fernerkundungsdaten umfassten Merkmalsparametern; und
Erzeugen des Konfidenzwerts, der dem Stück intermediärer Fernerkundungsdaten entspricht, basierend auf dem Merkmalsparameter.

7. Fusionsvorrichtung für multimodale Fernerkundungsdaten basierend auf dedizierter und gemeinsam genutzter Architektur, umfassend:

ein Datenerhaltungsmodul, das so konfiguriert ist, dass es eine Vielzahl von Stücken initialer Fernerkundungsdaten einer Region von Interesse erhält, wobei die Vielzahl von Stücken initialer Fernerkundungsdaten unterschiedliche Modalitätstypen aufweisen;
ein Datenkorrekturmodul, das so konfiguriert ist, dass es für jedes der Vielzahl von Stücken initialer Fernerkundungsdaten eine Datenkorrekturverarbeitung an den initialen Fernerkundungsdaten unter Verwendung eines konvolutionalen neuronalen Netzes, das den initialen Fernerkundungsdaten entspricht, basierend auf einem Modalitätstyp, der den initialen Fernerkundungsdaten entspricht, durchführt, um ein Stück intermediärer Fernerkundungsdaten zu erzeugen, das den initialen Fernerkundungsdaten entspricht, wobei alle Stücke intermediärer Fernerkundungsdaten, die der Vielzahl von Stücken initialer Fernerkundungsdaten entsprechen, eine gleiche räumliche Dimension und eine gleiche Kanaldimension aufweisen;
ein Konfidenzwerterhaltungsmodul, das so konfiguriert ist, dass es für jedes der Stücke intermediärer Fernerkundungsdaten einen Konfidenzwert, der dem Stück intermediärer Fernerkundungsdaten entspricht, unter Verwendung eines gemeinsam genutzten Merkmalsassoziationsnetzes erhält, wobei jedes der Stücke intermediärer Fernerkundungsdaten eine Vielzahl von Merkmalsparametern umfasst, wobei jeder der Merkmalsparameter einem Konfidenzwert entspricht, und wobei ein Konfidenzwert eines Stücks intermediärer Fernerkundungsdaten basierend auf Repräsentationsstärken von Merkmalsparametern des Stücks intermediärer Fernerkundungsdaten zu entsprechender Bodenmerkmalinformation in der Region von Interesse bestimmt wird;
ein Datenersetzungsmodul, das so konfiguriert ist, dass es für jedes der Stücke intermediärer Fernerkundungsdaten eine Ersetzungsverarbeitung an einem Ziel-Merkmalsparameter in dem Stück intermediärer Fernerkundungsdaten basierend auf dem Konfidenzwert des Stücks intermediärer Fernerkundungsdaten durchführt, um ein Stück ersetzter Fernerkundungsdaten zu erzeugen, das dem Stück initialer Fernerkundungsdaten entspricht, wobei der Ziel-Merkmalsparameter einem Konfidenzwert kleiner als einem Konfidenzschwellenwert entspricht, und wobei ein Konfidenzwert, der einem Merkmalsparameter in den ersetzten Fernerkundungsdaten entspricht, größer als oder gleich dem Konfidenzschwellenwert ist; und
ein Datenfusionsmodul, das so konfiguriert ist, dass es fusionierte Fernerkundungsdaten der Region von Interesse basierend auf allen Stücken ersetzter Fernerkundungsdaten und Modalitätsgewichten erzeugt, wobei die Modalitätsgewichte basierend auf Fusionsverhältnissen ersetzter Fernerkundungsdaten, die unterschiedliche Modalitätstypen aufweisen, bestimmt werden;
wobei das Datenkorrekturmodul Folgendes umfasst:

ein Normalisierungsmodul, das so konfiguriert ist, dass es eine Datennormalisierungsverarbeitung an den initialen Fernerkundungsdaten durchführt, um erste initiale Daten zu erzeugen, wobei jeder der Parameter in den ersten initialen Daten innerhalb eines vorgegebenen Bereichs liegt; und
ein erstes Entrauschungsmodul, das so konfiguriert ist, dass es eine Datenentrauschungsverarbeitung an den ersten initialen Daten durchführt, um zweite initiale Daten zu erzeugen, wobei die Datenentrauschungsverarbeitung durchgeführt wird, um einen Parameter basierend auf einem Wert des Parameters zu reduzieren, wobei der Wert des Parameters positiv mit einem Reduktionsgrad korreliert, und wobei sowohl die Datennormalisierungsverarbeitung als auch die Datenentrauschungsverarbeitung basierend auf einem Modalitätstyp, der den initialen Fernerkundungsdaten entspricht, bestimmt werden.

8. Fusionsvorrichtung für multimodale Fernerkundungsdaten basierend auf dedizierter und gemeinsam genutzter Architektur nach Anspruch 7, wobei das Datenkorrekturmodul weiter Folgendes umfasst:

ein Datenkompensationsmodul, das so konfiguriert ist, dass es eine Datenkompensationsverarbeitung an den zweiten initialen Daten unter Verwendung der initialen Fernerkundungsdaten durchführt, um die intermediären Fernerkundungsdaten zu erzeugen, wobei die Datenkompensationsverarbeitung durchgeführt wird, um Bodenmerkmalinformation in den initialen Fernerkundungsdaten auf die zweiten initialen Daten zu kompensieren; und
das Datenkompensationsmodul Folgendes umfasst:

ein räumliches Kompensationsmodul, das so konfiguriert ist, dass es eine Kompensationsverarbeitung der räumlichen Dimension an den zweiten initialen Daten unter Verwendung der initialen Fernerkundungsdaten durchführt, um erste Kompensationsdaten zu erzeugen; und
ein Kanalkompensationsmodul, das so konfiguriert ist, dass es eine Kompensationsverarbeitung der Kanaldimension an den ersten Kompensationsdaten durchführt, um die intermediären Fernerkundungsdaten zu erzeugen.

9. Fusionsvorrichtung für multimodale Fernerkundungsdaten basierend auf dedizierter und gemeinsam genutzter Architektur nach Anspruch 8, wobei das räumliche Kompensationsmodul Folgendes umfasst:

ein erstes Merkmalsextraktionsmodul, das so konfiguriert ist, dass es eine erste Merkmalsextraktionsverarbeitung an den initialen Fernerkundungsdaten durchführt, um dritte initiale Daten zu erzeugen, wobei die erste Merkmalsextraktionsverarbeitung durchgeführt wird, um die Bodenmerkmalinformation in der Region von Interesse, die in den initialen Fernerkundungsdaten umfasst ist, zu extrahieren;
ein erstes Konkatenierungsmodul, das so konfiguriert ist, dass es die zweiten initialen Daten und die dritten initialen Daten konkateniert, um erste konkatenierte Fernerkundungsdaten zu erzeugen;
ein zweites Entrauschungsmodul, das so konfiguriert ist, dass es eine Kompensations- und Entrauschungsverarbeitung an den ersten konkatenierten Fernerkundungsdaten durchführt, um ein erstes räumliches Fusionsmerkmal zu erzeugen;
ein zweites Merkmalsextraktionsmodul, das so konfiguriert ist, dass es eine zweite Merkmalsextraktionsverarbeitung an den ersten konkatenierten Fernerkundungsdaten durchführt, um ein zweites räumliches Fusionsmerkmal zu erzeugen, wobei die zweite Merkmalsextraktionsverarbeitung durchgeführt wird, um Bodenmerkmalinformation in der Region von Interesse, die in den ersten konkatenierten Fernerkundungsdaten umfasst ist, zu extrahieren;
ein erstes Kompensationsmodul, das so konfiguriert ist, dass es eine Datenkompensation der räumlichen Dimension an den zweiten initialen Daten basierend auf dem ersten räumlichen Fusionsmerkmal durchführt, um vierte initiale Daten zu erzeugen;
ein zweites Kompensationsmodul, das so konfiguriert ist, dass es eine Datenkompensation der räumlichen Dimension an den dritten initialen Daten basierend auf dem zweiten räumlichen Fusionsmerkmal durchführt, um fünfte initiale Daten zu erzeugen; und
ein erstes Erzeugungsmodul, das so konfiguriert ist, dass es die ersten Kompensationsdaten basierend auf den vierten initialen Daten und den fünften initialen Daten erzeugt.

10. Fusionsvorrichtung für multimodale Fernerkundungsdaten basierend auf dedizierter und gemeinsam genutzter Architektur nach Anspruch 9, wobei das Kanalkompensationsmodul Folgendes umfasst:

ein zweites Konkatenierungsmodul, das so konfiguriert ist, dass es die vierten initialen Daten und die fünften initialen Daten konkateniert, um zweite konkatenierte Fernerkundungsdaten zu erhalten;

ein vollständiges Konvolutionsmodul, das so konfiguriert ist, dass es eine vollständige Konvolutionsoperation an den zweiten konkatenierten Fernerkundungsdaten durchführt, um sechste initiale Daten zu erzeugen; und

ein drittes Kompensationsmodul, das so konfiguriert ist, dass es eine Datenkompensation der Kanaldimension an den sechsten initialen Daten basierend auf den zweiten konkatenierten Fernerkundungsdaten durchführt, um die intermediären Fernerkundungsdaten zu erzeugen.

11. Fusionsvorrichtung für multimodale Fernerkundungsdaten basierend auf dedizierter und gemeinsam genutzter Architektur nach Anspruch 9 oder 10, wobei das erste Erzeugungsmodul Folgendes umfasst:

ein erstes Gradientenverstärkungsmodul, das so konfiguriert ist, dass es eine Gradientenverstärkungsverarbeitung an den vierten initialen Daten unter Verwendung der dritten initialen Daten durchführt, um erste Gradienten-Fernerkundungsdaten zu erzeugen;

ein zweites Gradientenverstärkungsmodul, das so konfiguriert ist, dass es eine Gradientenverstärkungsverarbeitung an den fünften initialen Daten unter Verwendung der zweiten initialen Daten durchführt, um zweite Gradienten-Fernerkundungsdaten zu erzeugen; und

ein erstes Erzeugungsuntermodul, das so konfiguriert ist, dass es die ersten Kompensationsdaten basierend auf den ersten Gradienten-Fernerkundungsdaten und den zweiten Gradienten-Fernerkundungsdaten erzeugt.

12. Fusionsvorrichtung für multimodale Fernerkundungsdaten basierend auf dedizierter und gemeinsam genutzter Architektur nach einem der Ansprüche 7 bis 11, wobei

das gemeinsam genutzte Merkmalsassoziationsnetz ein gemeinsam genutztes Merkmalsfusionsnetz umfasst; und

das Konfidenzwerterhaltungsmodul Folgendes umfasst:

ein Merkmalsverstärkungsmodul, das so konfiguriert ist, dass es für jedes der Stücke intermediärer Fernerkundungsdaten durch das gemeinsam genutzte Merkmalsfusionsnetz einen Merkmalsparameter erzeugt, der dem Stück intermediärer Fernerkundungsdaten entspricht, basierend auf einer semantischen Beziehung zwischen den in dem Stück intermediärer Fernerkundungsdaten umfassten Merkmalsparametern; und

ein Konfidenzwerterzeugungsmodul, das so konfiguriert ist, dass es den Konfidenzwert, der dem Stück intermediärer Fernerkundungsdaten entspricht, basierend auf dem Merkmalsparameter erzeugt.

13. Elektronische Vorrichtung, umfassend:

einen Speicher;
einen Prozessor; und
ein Computerprogramm, das in dem Speicher gespeichert ist und in der Lage ist, durch den Prozessor ausgeführt zu werden; wobei
der Prozessor so konfiguriert ist, dass er bei Ausführen des Computerprogramms das Fusionsverfahren für multimodale Fernerkundungsdaten basierend auf dedizierter und gemeinsam genutzter Architektur nach einem der Ansprüche 1 bis 6 durchführt.

**Revendications**

1. Procédé de fusion pour données de détection à distance multimodales sur la base d'une architecture dédiée et partagée, comprenant :

l'obtention d'une pluralité de pièces de données de détection à distance initiales d'une région d'intérêt, dans lesquelles lesdites pièces de données de détection à distance initiales présentent des types de modalité différents ;

la mise en œuvre, pour chacune de la pluralité de pièces de données de détection à distance initiales, d'un traitement de correction de données sur les données de détection à distance initiales en utilisant un réseau neuronal convolutionnel correspondant aux données de détection à distance initiales sur la base d'un type de modalité correspondant aux données de détection à distance initiales afin de générer une pièce de données de détection à distance intermédiaires correspondant aux données de détection à distance initiales, dans lequel toutes les pièces de données de détection à distance intermédiaires correspondant à la pluralité de pièces de données de détection à distance initiales présentent une même dimension spatiale et une même dimension de canal ;

l'obtention, pour chacune des pièces de données de détection à distance intermédiaires, d'une valeur de confiance correspondant à la pièce de données de détection à distance intermédiaires en utilisant un réseau d'association de caractéristiques partagées, dans lequel chacune des pièces de données de détection à distance intermédiaires comprend une pluralité de paramètres de caractéristique, chacun des paramètres de caractéristique correspond à une valeur de confiance, et une valeur de confiance d'une pièce de données de détection à distance intermédiaires est déterminée sur la base de forces de représentation de paramètres de caractéristique de la pièce de données de détection à distance intermédiaires à des informations de caractéristique de sol correspondantes dans la région d'intérêt ;

la mise en œuvre, pour chacune des pièces de données de détection à distance intermédiaires, d'un traitement de remplacement sur un paramètre de caractéristique cible dans la pièce de données de détection à distance intermédiaires sur la base de la valeur de confiance de la pièce de données de détection à distance intermédiaires afin de générer une pièce de données de détection à distance remplacées correspondant à la pièce de données de détection à distance initiales, dans lequel le paramètre de caractéristique cible correspond à une valeur de confiance inférieure à un seuil de confiance, et une valeur de confiance correspondant à un paramètre de caractéristique dans les données de détection à distance remplacées est supérieure ou égale au seuil de confiance ; et

la génération de données de détection à distance fusionnées de la région d'intérêt sur la base de toutes les pièces de données de détection à distance remplacées et de poids de modalité, dans lequel les poids de modalité sont déterminés sur la base de rapports de fusion de données de détection à distance remplacées présentant des types de modalité différents ;

dans lequel le traitement de correction de données comprend :

la mise en œuvre d'un traitement de normalisation de données sur les données de détection à distance initiales afin de générer des premières données initiales, dans lequel chacun des paramètres dans les premières données initiales est dans une plage prédéfinie ; et

la mise en œuvre d'un traitement de débruitage de données sur les premières données initiales pour générer des deuxièmes données initiales, dans lequel le traitement de débruitage de données est mis en œuvre pour réduire un paramètre sur la base d'une valeur du paramètre, la valeur du paramètre est positivement corrélée avec un degré de réduction, et à la fois le traitement de normalisation de données et le traitement de débruitage de données sont déterminés sur la base d'un type de modalité correspondant aux données de détection à distance initiales.

2. Procédé de fusion pour données de détection à distance multimodales sur la base d'une architecture dédiée et partagée selon la revendication 1, dans lequel le traitement de correction de données comprend en outre :

la mise en œuvre d'un traitement de compensation de données sur les deuxièmes données initiales en utilisant les données de détection à distance initiales afin de générer les données de détection à distance intermédiaires, dans lequel le traitement de compensation de données est mis en œuvre pour compenser des informations de caractéristique du sol dans les données de détection à distance initiales aux deuxièmes données initiales ; et le traitement de compensation de données comprend :

la mise en œuvre d'un traitement de compensation de dimension spatiale sur les deuxièmes données initiales en utilisant les données de détection à distance initiales afin de générer des premières données de compensation ; et

la mise en œuvre d'un traitement de compensation de dimension de canal sur les premières données de compensation afin de générer les données de détection à distance intermédiaires.

3. Procédé de fusion pour données de détection à distance multimodales sur la base d'une architecture dédiée et partagée selon la revendication 2, dans lequel la mise en œuvre du traitement de compensation de dimension spatiale sur les deuxièmes données initiales en utilisant les données de détection à distance initiales afin de générer des premières données de compensation comprend :

la mise en œuvre d'un premier traitement d'extraction de caractéristiques sur les données de détection à distance initiales afin de générer des troisièmes données initiales, dans lequel le premier traitement d'extraction de caractéristiques est mis en œuvre pour extraire les informations de caractéristique de sol dans la région d'intérêt comprises dans les données de détection à distance initiales ;

la concaténation des deuxièmes données initiales et des troisièmes données initiales afin de générer des premières données de détection à distance concaténées ;

la mise en œuvre d'un traitement de compensation et de débruitage sur les premières données de détection à distance concaténées afin de générer une première caractéristique de fusion spatiale ;

la mise en œuvre d'un second traitement d'extraction de caractéristiques sur les premières données de détection à distance concaténées afin de générer une seconde caractéristique de fusion spatiale, dans lequel le second traitement d'extraction de caractéristiques est mis en œuvre pour extraire des informations de caractéristique de sol dans la région d'intérêt comprises dans les premières données de détection à distance concaténées ;

la mise en œuvre d'une compensation de données de dimension spatiale sur les deuxièmes données initiales sur la base de la première caractéristique de fusion spatiale afin de générer des quatrièmes données initiales ;

la mise en œuvre d'une compensation de données de dimension spatiale sur les troisièmes données initiales sur la base de la seconde caractéristique de fusion spatiale afin de générer des cinquièmes données initiales ; et

la génération des premières données de compensation sur la base des quatrièmes données initiales et des cinquièmes données initiales.

4. Procédé de fusion pour données de détection à distance multimodales sur la base d'une architecture dédiée et partagée selon la revendication 3, dans lequel la mise en œuvre du traitement de compensation de dimension de canal sur les premières données de compensation afin de générer les données de détection à distance intermédiaires comprend :

la concaténation des quatrièmes données initiales et des cinquièmes données initiales afin d'obtenir des secondes données de détection à distance concaténées ;

la mise en œuvre d'une opération de convolution complète sur les secondes données de détection à distance concaténées afin de générer des sixièmes données initiales ; et

la mise en œuvre d'une compensation de données de dimension de canal sur les sixièmes données initiales sur la base des secondes données de détection à distance concaténées afin de générer les données de détection à distance intermédiaires.

5. Procédé de fusion pour données de détection à distance multimodales sur la base d'une architecture dédiée et partagée selon la revendication 3, dans lequel la génération des premières données de compensation sur la base des quatrièmes données initiales et des cinquièmes données initiales comprend :

la mise en œuvre d'un traitement de gradient sur les quatrièmes données initiales en utilisant les troisièmes données initiales afin de générer des premières données de détection à distance de gradient ;

la mise en œuvre d'un traitement de gradient sur les cinquièmes données initiales en utilisant les deuxièmes données initiales afin de générer des secondes données de détection à distance de gradient ; et

la génération des premières données de compensation sur la base des premières données de détection à distance de gradient et des secondes données de détection à distance de gradient.

6. Procédé de fusion pour données de détection à distance multimodales sur la base d'une architecture dédiée et partagée selon l'une quelconque des revendications précédentes, dans lequel

le réseau d'association de caractéristiques partagées comprend un réseau de fusion de caractéristiques partagées ; et

l'obtention, pour chacune des pièces de données de détection à distance intermédiaires, d'une valeur de confiance correspondant à la pièce de données de détection à distance intermédiaires en utilisant un réseau d'association de caractéristiques partagées comprend :

pour chacune des pièces de données de détection à distance intermédiaires,

la génération, par le réseau de fusion de caractéristiques partagées, d'un paramètre de caractéristique correspondant à la pièce de données de détection à distance intermédiaires sur la base d'une relation sémantique entre les paramètres de caractéristique compris dans la pièce de données de détection à distance intermédiaires ; et

la génération de la valeur de confiance correspondant à la pièce de données de détection à distance intermédiaires sur la base du paramètre de caractéristique.

7. Appareil de fusion pour données de détection à distance multimodales sur la base d'une architecture dédiée et partagée, comprenant :

un module d'obtention de données, configuré pour obtenir une pluralité de pièces de données de détection à distance initiales d'une région d'intérêt, dans lequel la pluralité de pièces de données de détection à distance initiales présentent des types de modalité différents ;
un module de correction de données, configuré pour mettre en œuvre, pour chacune de la pluralité de pièces de données de détection à distance initiales, un traitement de correction de données sur les données de détection à distance initiales en utilisant un réseau neuronal convolutionnel correspondant aux données de détection à distance initiales sur la base d'un type de modalité correspondant aux données de détection à distance initiales afin de générer une pièce de données de détection à distance intermédiaires correspondant aux données de détection à distance initiales, dans lequel toutes les pièces de données de détection à distance intermédiaires correspondant à la pluralité de pièces de données de détection à distance initiales présentent une même dimension spatiale et une même dimension de canal ;
un module d'obtention de valeur de confiance, configuré pour obtenir, pour chacune des pièces de données de détection à distance intermédiaires, une valeur de confiance correspondant à la pièce de données de détection à distance intermédiaires en utilisant un réseau d'association de caractéristiques partagées, dans lequel chacune des pièces de données de détection à distance intermédiaires comprend une pluralité de paramètres de caractéristique, chacun des paramètres de caractéristique correspond à une valeur de confiance, et une valeur de confiance d'une pièce de données de détection à distance intermédiaires est déterminée sur la base de forces de représentation de paramètres de caractéristique de la pièce de données de détection à distance intermédiaires à des informations de caractéristique de sol correspondantes dans la région d'intérêt ;
un module de remplacement de données, configuré pour mettre en œuvre, pour chacune des pièces de données de détection à distance intermédiaires, un traitement de remplacement sur un paramètre de caractéristique cible dans la pièce de données de détection à distance intermédiaires sur la base de la valeur de confiance de la pièce de données de détection à distance intermédiaires afin de générer une pièce de données de détection à distance remplacées correspondant à la pièce de données de détection à distance initiales, dans lequel le paramètre de caractéristique cible correspond à une valeur de confiance inférieure à un seuil de confiance, et une valeur de confiance correspondant à un paramètre de caractéristique dans les données de détection à distance remplacées est supérieure ou égale au seuil de confiance ; et
un module de fusion de données, configuré pour générer des données de détection à distance fusionnées de la région d'intérêt sur la base de toutes les pièces de données de détection à distance remplacées et de poids de modalité, dans lequel les poids de modalité sont déterminés sur la base de rapports de fusion de données de détection à distance remplacées présentant des types de modalité différents ;
dans lequel le module de correction de données comprend :

un module de normalisation, configuré pour mettre en œuvre un traitement de normalisation de données sur les données de détection à distance initiales afin de générer des premières données initiales, dans lequel chacun des paramètres dans les premières données initiales est dans une plage prédéfinie ; et
un premier module de débruitage, configuré pour mettre en œuvre un traitement de débruitage de données sur les premières données initiales afin de générer des deuxièmes données initiales, dans lequel le traitement de débruitage de données est mis en œuvre pour réduire un paramètre sur la base d'une valeur du paramètre, la valeur du paramètre est positivement corrélée avec un degré de réduction, et à la fois le traitement de normalisation de données et le traitement de débruitage de données sont déterminés sur la base d'un type de modalité correspondant aux données de détection à distance initiales.

8. Appareil de fusion pour données de détection à distance multimodales sur la base d'une architecture dédiée et partagée selon la revendication 7, dans lequel le module de correction de données comprend en outre :

un module de compensation de données, configuré pour mettre en œuvre un traitement de compensation de données sur les deuxièmes données initiales en utilisant les données de détection à distance initiales afin de générer les données de détection à distance intermédiaires, dans lequel le traitement de compensation de données est mis en œuvre pour compenser des informations de caractéristique du sol dans les données de détection à distance initiales aux deuxièmes données initiales ; et
le module de compensation de données comprend :

un module de compensation spatiale, configuré pour mettre en œuvre un traitement de compensation de dimension spatiale sur les deuxièmes données initiales en utilisant les données de détection à distance initiales afin de générer des premières données de compensation ; et

un module de compensation de canal, configuré pour mettre en œuvre un traitement de compensation de dimension de canal sur les premières données de compensation afin de générer les données de détection à distance intermédiaires.

9. Appareil de fusion pour données de détection à distance multimodales sur la base d'une architecture dédiée et partagée selon la revendication 8, dans lequel le module de compensation spatiale comprend :

un premier module d'extraction de caractéristiques, configuré pour mettre en œuvre un premier traitement d'extraction de caractéristiques sur les données de détection à distance initiales afin de générer des troisièmes données initiales, dans lequel le premier traitement d'extraction de caractéristiques est mis en œuvre pour extraire les informations de caractéristique de sol dans la région d'intérêt comprises dans les données de détection à distance initiales ;

un premier module de concaténation, configuré pour concaténer les deuxièmes données initiales et les troisièmes données initiales afin de générer des premières données de détection à distance concaténées ;

un second module de débruitage, configuré pour mettre en œuvre un traitement de compensation et de débruitage sur les premières données de détection à distance concaténées afin de générer une première caractéristique de fusion spatiale ;

un second module d'extraction de caractéristiques, configuré pour mettre en œuvre un second traitement d'extraction de caractéristiques sur les premières données de détection à distance concaténées afin de générer une seconde caractéristique de fusion spatiale, dans lequel le second traitement d'extraction de caractéristiques est mis en œuvre pour extraire des informations de caractéristique de sol dans la région d'intérêt comprises dans les premières données de détection à distance concaténées ;

un premier module de compensation, configuré pour mettre en œuvre une compensation de données de dimension spatiale sur les deuxièmes données initiales sur la base de la première caractéristique de fusion spatiale afin de générer des quatrièmes données initiales ;

un deuxième module de compensation, configuré pour mettre en œuvre une compensation de données de dimension spatiale sur les troisièmes données initiales sur la base de la seconde caractéristique de fusion spatiale afin de générer des cinquièmes données initiales ; et

un premier module de génération, configuré pour générer les premières données de compensation sur la base des quatrièmes données initiales et des cinquièmes données initiales.

10. Appareil de fusion pour données de détection à distance multimodales sur la base d'une architecture dédiée et partagée selon la revendication 9, dans lequel le module de compensation de canal comprend :

un second module de concaténation, configuré pour concaténer les quatrièmes données initiales et les cinquièmes données initiales afin d'obtenir des secondes données de détection à distance concaténées ;

un module de convolution complète, configuré pour mettre en œuvre une opération de convolution complète sur les secondes données de détection à distance concaténées afin de générer des sixièmes données initiales ; et

un troisième module de compensation, configuré pour mettre en œuvre une compensation de données de dimension de canal sur les sixièmes données initiales sur la base des secondes données de détection à distance concaténées afin de générer les données de détection à distance intermédiaires.

11. Appareil de fusion pour données de détection à distance multimodales sur la base d'une architecture dédiée et partagée selon la revendication 9 ou revendication 10, dans lequel le premier module de génération comprend :

un premier module d'amélioration de gradient, configuré pour mettre en œuvre un traitement d'amélioration de gradient sur les quatrièmes données initiales en utilisant les troisièmes données initiales afin de générer des premières données de détection à distance de gradient ;

un second module d'amélioration de gradient, configuré pour mettre en œuvre un traitement d'amélioration de gradient sur les cinquièmes données initiales en utilisant les deuxièmes données initiales afin de générer des secondes données de détection à distance de gradient ; et

un premier sous-module de génération, configuré pour générer les premières données de compensation sur la base des premières données de détection à distance de gradient et des secondes données de détection à distance de gradient.

**12.** Appareil de fusion pour données de détection à distance multimodales sur la base d'une architecture dédiée et partagée selon l'une quelconque des revendications 7 à 11, dans lequel

le réseau d'association de caractéristiques partagées comprend un réseau de fusion de caractéristiques partagées ; et
le module d'obtention de valeur de confiance comprend :

un module d'amélioration de caractéristiques, configuré pour, pour chacune des pièces de données de détection à distance intermédiaires, générer, par le réseau de fusion de caractéristiques partagées, un paramètre de caractéristique correspondant à la pièce de données de détection à distance intermédiaires sur la base d'une relation sémantique entre les paramètres de caractéristique compris dans la pièce de données de détection à distance intermédiaires ; et
un module de génération de confiance, configuré pour générer la valeur de confiance correspondant à la pièce de données de détection à distance intermédiaires sur la base du paramètre de caractéristique.

**13.** Dispositif électronique, comprenant :

une mémoire ;
un processeur ; et
un programme informatique, stocké dans la mémoire et apte à être mis en œuvre par le processeur ; dans lequel le processeur est configuré pour, lorsqu'il met en œuvre le programme informatique, mettre en œuvre le procédé de fusion pour données de détection à distance multimodales sur la base d'une architecture dédiée et partagée selon l'une quelconque des revendications 1 à 6.

S100:Obtain multiple pieces of initial remote sensing data of a region of interest

S200:Perform, for each of the plurality pieces of initial remote sensing data, data correction processing on the initial remote sensing data using a dedicated network based on a modal type corresponding to the initial remote sensing data to generate a piece of intermediate remote sensing data corresponding to the initial remote sensing data

S300:Obtain, for each of the pieces of intermediate remote sensing data, a confidence value corresponding to the piece of intermediate remote sensing data with a shared feature association network

S400:Perform, for each of the pieces of intermediate remote sensing data, replacement processing on a target feature parameter in the piece of intermediate remote sensing data based on the confidence value of the piece of intermediate remote sensing data to generate a piece of sub fused remote sensing data corresponding to the piece of initial remote sensing data

S500:Generate fused remote sensing data of the region of interest based on all pieces of sub fused remote sensing data and modal weights

**Figure 1**

S201:Perform data normalization processing on the initial remote sensing data to generate first initial data

S202:Perform data denoising processing on the first initial data to generate second initial data

**Figure 2**

S213:Perform data compensation processing on the second initial data using the initial remote sensing data to generate the intermediate remote sensing data

S223:Perform spatial dimension compensation processing on the second initial data using the initial remote sensing data to generate first compensation data

S233:Perform channel dimension compensation processing on the first compensation data to generate the intermediate remote sensing data

**Figure 3**

S2231:Perform first feature extraction processing on the initial remote sensing data to generate third initial data

S2232:Concatenate the second initial data and the third initial data to generate first concatenated remote sensing data

S2233:Perform compensation and denoising processing on the first concatenated remote sensing data to generate a first spatial fusion feature

S2234:Perform second feature extraction processing on the first concatenated remote sensing data to generate a second spatial fusion feature

S2235:Perform spatial dimension data compensation on the second initial data based on the first spatial fusion feature to generate fourth initial data

S2236Perform spatial dimension data compensation on the third initial data based on the second spatial fusion feature to generate fifth initial data

S2237:Generate the first compensation data based on the fourth initial data and the fifth initial data

**Figure 4**

S2331:Concatenate the fourth initial data and the fifth initial data to obtain second concatenated remote sensing data

S2332:Perform a full convolution operation on the second concatenated remote sensing data to generate sixth initial data

S2333:Perform channel dimension data compensation on the sixth initial data based on the second concatenated remote sensing data to generate the intermediate remote sensing data

**Figure 5**

S2238:Perform gradient enhancement processing on the fourth initial data using the third initial data to generate first gradient remote sensing data

S2239:Perform gradient enhancement processing on the fifth initial data using the second initial data to generate second gradient remote sensing data

S2240:Generate the first compensation data based on the first gradient remote sensing data and the second gradient remote sensing data

**Figure 6**

A100:Obtain multiple pieces of intermediate remote sensing data of a region of interest

A200:Input, for each of the pieces of intermediate remote sensing data, the piece of intermediate remote sensing data to a shared feature fusion network to generate a piece of sub fused remote sensing data corresponding to the piece of initial remote sensing data

A300:Generate fused remote sensing data of the region of interest based on all pieces of sub fused remote sensing data and modal weights

**Figure 7**

A201:Generate, for each of the pieces of intermediate remote sensing data, an enhanced feature parameter corresponding to the piece of intermediate remote sensing data based on a semantic relationship between the feature parameters included in the piece of intermediate remote sensing data

A202:Generate a confidence value for each of the feature parameters

A203:Perform, for each of the pieces of intermediate remote sensing data, replacement processing on a target feature parameter in the piece of intermediate remote sensing data based on the confidence value of the piece of intermediate remote sensing data to generate a piece of sub fused remote sensing data corresponding to the piece of intermediate remote sensing data

**Figure 8**

A210:Input each of the pieces of intermediate remote sensing data as an initial value to a shared feature fusion network arranged at an initial position

A220:Determine an output value of a shared feature fusion network arranged at an end position as a piece of sub fused remote sensing data corresponding to the piece of intermediate remote sensing data

**Figure 9**

A2031:Determine a target replacement feature parameter based on confidence values corresponding to multiple to-be-replaced feature parameters

A2032:Replace the target feature parameter with the target replacement feature parameter to generate a piece of sub fused remote sensing data corresponding to each of the pieces of intermediate remote sensing data

**Figure 10**

A2021:Determine a confidence generation network based on a modal type corresponding to each of the enhanced feature parameters

A2022:Generate a confidence value corresponding to each of the enhanced feature parameters with a corresponding confidence generation network

**Figure 11**

A204:Perform enhancement processing on a target encoding parameter, corresponding to a position code, in a piece of sub fused remote sensing data based on the position code to generate an encoded enhancement feature parameter

**Figure 12**

A101:Obtain multiple pieces of initial intermediate remote sensing data of the region of interest

A102:Divide each of the multiple pieces of initial intermediate remote sensing data into multiple pixel regions having a same size

A103:Generate, for each of the pixel regions, a feature parameter corresponding to the pixel region based on a parameter, corresponding to the pixel region, in the initial intermediate remote sensing data

A104:Obtain a position code of a feature parameter corresponding to each of the pixel regions

A105:Generate, for each of the pieces of initial intermediate remote sensing data, a piece of intermediate remote sensing data based on the feature parameter and the position code corresponding to the piece of initial intermediate remote sensing data

**Figure 13**

| A400:Perform remote sensing interpretation processing on the fused remote sensing data to generate an interpretation result |
| --- |

**Figure 14**

| Fusion apparatus for multimodal remote sensing data based on dedicated and shared architecture |
| --- |
| Data obtaining module |
| Data correction module |
| Confidence value obtaining module |
| Data replacement module |
| Data fusion module |

**Figure 15**

Normalization module

First denoising module

**Figure 16**

Spatial compensation module

Channel compensation module

**Figure 17**

First feature extraction module

First concatenation module

Second denoising module

Second feature extraction module

First compensation module

Second compensation module

First generation module

**Figure 18**

Second concatenation module

Full convolution module

Third compensation module

**Figure 19**

First gradient enhancement module

Second gradient enhancement module

First generation sub module

**Figure 20**

Feature enhancement module

Confidence generation module

**Figure 21**

Fusion apparatus for multimodal remote
sensing data based on cross domain sharing

Intermediate data
obtaining module

Feature fusion module

Data fusion module

**Figure 22**

Feature enhancement module

Confidence generation sub module

Parameter replacement module

**Figure 23**

Inputting module

Outputting module

**Figure 24**

Target determination module

Target replacement module

**Figure 25**

Network determination module

Confidence generation unit

**Figure 26**

Code enhancement module

**Figure 27**

Initial data obtaining module

Pixel division module

Feature generation module

Code obtaining module

Intermediate data generation module

**Figure 28**

Intermediate data obtaining module

Feature fusion module

Data fusion module

Interpretation module

**Figure 29**

Figure 30

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Z. CAO et al.** C3Net: Cross-Modal Feature Recalibrated, Cross-Scale Semantic Aggregated and Compact Network for Semantic Segmentation of Multi-Modal High-Resolution Aerial Images. *Remote Sens.*, 2021, vol. 13, 528